# EUROPEAN PATENT SPECIFICATION

(11) **EP 1 348 747 B1**
(45) Date of publication and mention of the grant of the patent: **14.02.2007**
(21) Application number: 03006957.9
(22) Date of filing: 26.03.2003
(51) Int. Cl.: C09D 183/10, C08G 77/442, C08G 77/58, C08K 5/057, C08K 5/09

(54) **Gas barrier coating composition and method for manufacturing same**
Beschichtung mit Gasbarriereeigenschaften und Herstellungsverfahren
Composition de revêtement formant barrière pour les gaz et procédé de production de ladite composition

(30) Priority: 27.03.2002 JP 2002088715
(43) Date of publication of application: 01.10.2003
(73) Proprietor: JSR Corporation, Tokyo 104-0045 (JP); Dai Nippon Printing Co., Ltd., Tokyo 162-8001 (JP)
(72) Inventor: Shiho, Hiroshi, Tokyo (JP); Kawahara, Kouji, Tokyo (JP); Ishikawa, Satoshi, Tokyo (JP); Kanamori, Tarou, Tokyo (JP); Nishikawa, Akira, Tokyo (JP)
(74) Representative: TBK-Patent

(56) References cited:
- EP-A- 0 477 765
- EP-A- 0 649 047
- US-A- 5 412 016
- US-B1- 6 337 370

## Description

### BACKGROUND OF THE INVENTION

### Field of the Invention

The present invention relates to a gas barrier coating composition useful as a packaging material for medical supplies, foods, cosmetics, cigarettes, and toiletries and effective for precluding permeation of oxygen, water vapor, and other gases which may denature the packed contents.

### Description of Background Art

In recent years, materials having gas barrier properties capable of precluding permeation of oxygen, water vapor, and other gases which may denature packed contents are used for packing medical supplies, foods, cosmetics, cigarettes, and toiletries to prevent denaturation of the contents such as oxidation of proteins, fats, and oils and preserve quality such as taste in foods, for example.

Japanese Patent Application Laid-open Publication No. H7-266485, for example, proposes a gas barrier material prepared by forming a gas barrier film layer on a base material of a polymeric resin composition by coating the base material with a coating composition containing, as a main agent, a mixed solution of one or more metal alkoxides or their hydrolyzates and an isocyanate compound having two or more isocyanate groups, and drying the coating with heat. However, the gas barrier material is harmful to the human body since the material contains melamine, formaldehyde, tin chloride, and the like, which may indirectly invade the human body via the oral route particularly if used in medical supplies and foods.

On the other hand, Japanese Patent Application Laid-open Publication No. 55-132241 (1980) proposes a coating composition which does not contain isocyanate, but contains polyvinyl alcohols which are less harmful. Moreover EP0649047 and US 6337370 disclose gas barrier coating compositions based on polyvinyl alcohol, metal alcoholates and silane coupling agents. EP 0477765 and US 5412016 disclose combinations of inorganic network precursors and organic polymers. However, the material requires higher oxygen barrier properties under high humidity conditions if used for retortable container packaging for foods, since retort foods are processed under high humidity conditions at a temperature of 120°C or more. The gas barrier properties of the coating composition containing polyvinyl alcohols are significantly affected by moisture and unduly decrease under high humidity conditions. In addition, adhesion between the barrier coating layer and the base film unduly decreases under high humidity conditions or in water.

The present invention has been completed in view of the above problems in conventional technologies and has an object of providing a gas barrier coating composition harmless to the human body, which does not decrease its barrier properties against gases such as oxygen and water vapor under high humidity conditions and does not contain compounds which may be harmful to the human body such as melamine, formaldehyde, and organotin compounds.

### SUMMARY OF THE INVENTION

The present invention provides a gas barrier coating composition comprising:
(a) a polyvinyl alcohol resin, which is a copolymer of ethylene and vinyl alcohol,
(b) at least one compound selected from the group consisting of a metal alcoholate of the following formula (1),

   R¹ ₘM(OR²)ₙ (1)

   wherein M indicates a metal atom selected from the group consisting of titanium, zirconium, and aluminum, R¹ individually represents an organic group having 1-8 carbon atoms, R² individually represents an alkyl group having 1-5 carbon atoms, an acyl group having 1-6 carbon atoms, or a phenyl group, and m and n are individually an integer of 0 or more, with m + n representing the valence of M,
   a hydrolyzate of the metal alcoholate, a condensate of the metal alcoholate, a chelate compound of the metal alcoholate, a hydrolyzate of the metal chelate compound, a condensate of the metal chelate compound, a metal acylate of the above formula (1), a hydrolyzate of the metal acylate, and a condensate of the metal acylate, and
(c) at least one compound selected from the group consisting of an organosilane of the following formula (2),

   R³ ₚSi(OR⁴)₄₋ₚ (2)

   wherein R³ individually represents an organic group having 1-8 carbon atoms, R⁴ individually represents an alkyl group having 1-5 carbon atoms, an acyl group having 1-6 carbon atoms, or a phenyl group, and p is an integer of 0-2, a hydrolyzate of the organosilane, and a condensate of the organosilane.

In the above composition, the polyvinyl alcohol resin is a copolymer of ethylene and vinyl alcohol.

In the above composition, the copolymer of ethylene and vinyl alcohol preferably contains 20-45 mol% of recurring units originating from ethylene.

In the above composition, the polyvinyl alcohol resin preferably has a melt flow rate of 1-50 g/10 minutes measured at a temperature of 210°C and a load of 21.168 N.

The above composition preferably contains 10 to 10,000 parts by weight of the polyvinyl alcohol resin for 100 parts by weight of the component (b).

In a preferred embodiment of the above composition, when the component (b) is a metal alcoholate, a hydrolyzate of the metal alcoholate, a condensate of the metal alcoholate, a chelate compound of the metal alcoholate, a hydrolyzate of the metal chelate compound, or a condensate of the metal chelate compound, R¹ group in the formula (1) is an organic group selected from the group consisting of an alkyl group having 1-8 carbon atoms, acyl group having 1-8 carbon atoms, vinyl group, allyl group, cyclohexyl group, phenyl group, glycidyl group, (meth)acryloxy group, ureido group, amide group, fluoroacetamide group, isocyanate group, and substitution derivatives of these groups.

In the above composition, the component (b) is preferably a hydrolyzate hydrolyzed in water or a mixed solvent containing water and a hydrophilic organic solvent.

The present invention further provides a method of manufacturing the above gas barrier coating composition comprising:
hydrolyzing the above component (b) in water or a mixed solvent containing water and a hydrophilic organic solvent, and
mixing the resulting hydrolyzate with the component (a) and component (c).

In the present invention, a gas barrier coating film can be obtained by applying a coating of the gas barrier coating composition of the present invention on a substrate resin film.

It is possible to obtain the gas barrier coating film by first producing a vapor deposition layer of a metal and/or an inorganic compound on the substrate resin film and then producing a cured coating film of the gas barrier coating composition thereon.

Here, as the vapor deposition layer, an inorganic oxide vapor deposition layer produced by chemical vapor deposition and/or physical chemical vapor deposition is preferred.

Other objects, features and advantages of the invention will hereinafter become more readily apparent from the following description.

### BRIEF DESCRIPTION OF THE DRAWINGS

Fig. 1 shows an approximate construction of a plasma CVD apparatus.
Fig. 2 shows an approximate construction of a reel-type vacuum vapor deposition apparatus.

### DETAILED DESCRIPTION OF THE INVENTION AND PREFERRED EMBODIMENTS

### Coating composition

### Component (a)

The polyvinyl alcohol resin (a) is an ethylene-vinyl alcohol copolymer.

The ethylene-vinyl alcohol copolymers are saponified products of ethylene-vinyl acetate copolymers produced by saponification of ethylene-vinyl acetate random copolymers. Such copolymers include, but are not limited to, partially saponified copolymers having residual acetic acid groups in an amount of several tens of mols, copolymers having only several mols of residual acetic acid groups, and completely saponified copolymers having no residual acetic acid groups. In view of gas barrier properties, a preferable saponification degree of these copolymers is 80 mol% or more, and more preferably 90 mol% or more, with an optimal saponification degree being 95 mol% or more. The content of recurring units originating from ethylene (hereinafter referred to from time to time as "ethylene content") in the ethylene-vinyl alcohol copolymer is usually 0-50 mol%, and preferably 20-45 mol%.

As specific examples of the ethylene-vinyl alcohol copolymer, EVAL EP-F101 (ethylene content: 32 mol%) manufactured by Kuraray Co., Ltd. and Soarnol D2908, D2935 (ethylene content: 29 mol%), D2630 (ethylene content: 26%) and A4412 (ethylene content: 44%) manufactured by The Nippon Synthetic Chemical Industry Co., Ltd. can be given.

A melt flow rate of the polyvinyl alcohol resin (a) measured under the conditions of a temperature of 210°C and a load of 21.168 N is from 1 to 50 g/10 minutes, and preferably from 5 to 45 g/10 minutes. If the melt flow rate is less than 1 g/10 minutes, gas barrier properties may decrease. A melt flow rate of more than 50 g/10 minutes is undesirable because the product may exhibit impaired water resistance and solvent resistance.

An ethylene-vinyl alcohol copolymer is a particularly preferable component (a) in view of water resistance.

These polyvinyl alcohol resins (a) may be used either individually or in combination of two or more.

The amount of the component (a) in the coating composition of the present invention is usually 10 to 10,000 parts by weight, preferably 20 to 5, 000 parts by weight, and more preferably 100 to 1,000 parts by weight, for 100 parts by weight of the later-described component (b) before hydrolysis and/or condensation. If less than 10 parts by weight, cracks are easily produced in the resulting coating film, impairing gas barrier properties; if more than 10,000 parts by weight, the coating film may exhibit low gas barrier properties under high humidity conditions and/or after heat treatment.

### Component (b)

The component (b) used in the present invention is at least one compound selected from the group consisting of a metal alcoholate of the above formula (1), a hydrolyzate of the metal alcoholate, a condensate of the metal alcoholate, a chelate compound of the metal alcoholate (hereinafter referred to from time to time as "metal chelate compound"), a hydrolyzate of the metal chelate compound, a condensate of the metal chelate compound, a metal acylate of the above formula (1), a hydrolyzate of the metal acylate, and a condensate of the metal acylate. The component (b) may be either one compound or a mixture of two or more compounds selected from these nine types of compounds.

The above metal chelate compound can be obtained by reacting a metal alcoholate with at least one compound selected from the group consisting of a β-diketone, β-keto ester, hydroxy carboxylic acid, hydroxy carboxylic acid salt, hydroxy carboxylic acid ester, keto alcohol, and amino alcohol (these compounds are hereinafter referred to from time to time as "chelating agents").

Of these chelating agents, a β-diketone and a β-keto ester are preferable. As specific examples of such compounds, acetylacetone, methyl acetoacetate, ethyl acetoacetate, n-propyl acetoacetate, i-propyl acetoacetate, n-butyl acetoacetate, sec-butyl acetoacetate, t-butyl acetoacetate, 2,4-hexanedione, 2,4-heptanedione, 3,5-heptanedione, 2,4-octanedione, 2,4-nonanedione, and 5-methylhexanedione can be given.

In the present invention, the hydrolyzate of the above metal alcoholate, metal chelate compound, or metal acylate is not necessarily a compound in which all of the OR² groups contained in the metal alcoholate are hydrolyzed, but and may include a compound with one of the groups hydrolyzed, a compound with two or more of the groups hydrolyzed, and a mixture of these compounds.

The condensates of the above metal alcoholate, metal chelate compound, or metal acylate are produced by forming an M-O-M bond condensing M-OH groups in the hydrolyzate of the metal alcoholate, metal chelate compound, or metal acylate. In the present invention, not all the M-OH groups are necessarily condensed. The condensates conceptually include a compound in which only a small amount of M-OH groups is condensed, a compound in which the M-OH groups are condensed in varied degrees, and a mixture of condensates containing both M-OR groups and M-OH groups.

When the condensate is used as the component (b), either a product prepared by the hydrolysis/condensation of the above metal alcoholate, metal chelate compound, or metal acylate or a commercially available condensate may be used. In addition, the metal alcoholate condensate may be used either as is or as a condensate of a metal chelate compound after reacting with the above chelating agent.

Commercially available products of the metal alcoholate condensate include A-10, B-2, B-4, B-7, and B-10 (manufactured by Nippon Soda Co., Ltd.).

The component (b) is thought to form a co-condensate with at least one component selected from the group consisting of the component (a), the later-described component (c), and a vapor deposition component selected from metals and inorganic oxides.

Zirconium, titanium, and aluminum can be given as preferable metal atoms represented by M in the above formula (1), with a particularly preferable metal atom being titanium.

The monovalent organic group having 1-8 carbon atoms represented by R¹ differs according to whether the compound of the formula (1) is a metal alcoholate or a metal acylate.

When the compound is a metal alcoholate, examples of the group R¹ include alkyl groups such as a methyl group, ethyl group, n-propyl group, i-propyl group, n-butyl group, i-butyl group, sec-butyl group, t-butyl group, n-hexyl group, n-heptyl group, n-octyl group, and 2-ethylhexyl group; acyl groups such as an acetyl group, propionyl group, butyryl group, valeryl group, benzoyl group, and trioyl group; a vinyl group, allyl group, cyclohexyl group, phenyl group, glycidyl group, (meth) acryloxy group, ureido group, amide group, fluoroacetamide group, isocyanate group, and substitution derivatives of these groups. As examples of substituents in the substitution derivatives represented by R¹, a halogen atom, substituted or unsubstituted amino group, hydroxyl group, mercapto group, isocyanate group, glycidoxy group, 3,4-epoxycyclohexyl group, (meth)acryloxy group, ureido group, and ammonium salt group can be given. The number of carbon atoms of the substitution derivative represented by R¹ is 8 or less including the carbon atoms of the substituent.

When the compound is a metal acylate, acyloxy groups such as an acetoxy group, propionyloxy group, butyloxy group, valeryloxy group, benzoyloxy group, and tolyloxy group can be given as the monovalent organic group having 1-8 carbon atoms represented by R¹.

When two or more groups R¹ are present in the compound of formula (1), such groups may be either identical or different.

As examples of the alkyl group having 1-5 carbon atoms represented by R², a methyl group, ethyl group, n-propyl group, i-propyl group, n-butyl group, sec-butyl group, t-butyl group, and n-pentyl group can be given. As examples of an acyl group having 1-6 carbon atoms, an acetyl group, propionyl group, butyryl group, valeryl group, and caproyl group can be given.

When two or more groups R² are present in the compound of formula (1), such groups may be either identical or different.

Among these compounds of component (b), the following compounds can be given as specific examples of the metal alcoholate and the chelate compound of metal alcoholate:
(i) zirconium compounds such as tetra-n-butoxy zirconium, tri-n-butoxy·ethylacetoacetatezirconium, di-n-butoxy·bis(ethylacetoacetate)zirconium, n-butoxy·tris(ethylacetoacetate)zirconium, tetrakis(n-propylacetoacetate)zirconium, tetrakis(acetylacetoacetate)zirconium, and tetrakis(ethylacetoacetate)zirconium;
(ii) titanium compounds such as tetra-i-propoxytitanium, tetra-n-butoxytitanium, tetra-t-butoxytitanium, di-i-propoxy·bis(ethylacetoacetate)titanium, di-i-propoxy·bis(acetylacetate)titanium, di-i-propoxy·bis(acetylacetonate)titanium, di-n-butoxy·bis(triethanolaminate)titanium, dihydroxy·bislactetatetitanium, dihydroxytitanium lactate, and tetrakis(2-ethylhexyloxy)titanium; and
(iii) aluminum compounds such as tri-i-propoxyaluminum, di-i-propoxy·aluminum ethylacetoacetate, di-i-propoxy·acetylacetonatealuminum, i-propoxy·bis(ethylacetoacetate)aluminum, i-propoxy·bis(acetylacetonate)aluminum, tris(ethylacetoacetate)aluminum, tris(acetylacetonate)aluminum, and monoacetylacetonate·bis(ethylacetoacetate)aluminum.

Of these metal alcoholates and chelate compounds of metal alcoholate, tri-n-butoxy·ethylacetoacetatezirconium, di-i-propoxy·bis(acetylacetonate)titanium, tri-i-propoxy·(acetylacetonate)titanium, di-n-butoxy·bis(triethanolaminate)titanium, dihydroxy·bislactetatetitanium, di-i-propoxy·ethylacetoacetatealuminum, and tris(ethylacetoacetate)aluminum are preferable. Particularly preferred compounds are titanium compounds such as di-i-propoxy·bis(acetylacetonate)titanium, tri-i-propoxy·(acetylacetonate)titanium, di-n-butoxy·bis(triethanolaminate)titanium, and dihydroxy·bislactetatetitanium.

As specific examples of the metal acylate, dihydroxy·titanium dibutyrate, di-i-propoxy·titanium diacetate, di-i-propoxy·titanium dipropionate, di-i-propoxy·titanium dimaloniate, di-i-propoxy·titanium dibenzoylate, di-n-butoxy·zirconium diacetate, and di-i-propylaluminum monomaloniate can be given. Particularly preferred compounds are titanium compounds such as dihydroxy·titanium dibutyrate and di-i-propoxy·titanium diacetate.

These compounds of component (b) may be used either individually or in combination of two or more.

To avoid viscosity change over time of the coating composition and to ensure easy handling, compounds hydrolyzed in water or a mixed solvent containing water and a hydrophilic organic solvent, described later, are preferably used as the component (b) . The hydrolysis treatment before mixing with the component (a) produces a mixture of component (b) containing a non-hydrolyzed compound, partially hydrolyzed compound, and partially condensed compound. Such a mixture effectively suppresses a rapid viscosity rise due to shock and the like when the component (b) is mixed with the component (a) for preparing the composition, as well as a viscosity rise over time.

The amount of water used here is in the range of 0.1 to 1,000 mols, preferably 0.5 to 500 mols per one mol of R¹ₘM(OR²)ₙ.

The ratio by weight of water and a hydrophilic organic solvent in the mixed solvent is from 10:90 to 90:10, preferably from 20:80 to 80:20, and more preferably from 30:70 to 70:30.

Particularly preferred compounds hydrolyzed using the above mixed solvent are hydrolyzed titanium compounds of di-i-propoxy·bis(acetylacetonate)titanium, tri-i-propoxy·(acetylacetonate)titanium, di-n-butoxy·bis(triethanolaminate)titanium, dihydroxy·bislactetatetitanium, and the like.

### Component (c)

The component (c) is at least one compound selected from an organosilane of the above formula (2) (hereinafter referred to from time to time as "organosilane (2)"), and a hydrolyzate of the organosilane and/or the condensate thereof (the hydrolyzate and/or condensate are hereinafter collectively referred to from time to time as "hydrolyzate/condensate").

As examples of the organic group having 1-8 carbon atoms represented by R³ in the formula (2), alkyl groups such as a methyl group, ethyl group, n-propyl group, i-propyl group, n-butyl group, i-butyl group, sec-butyl group, t-butyl group, n-pentyl group, n-hexyl group, n-heptyl group, and n-octyl group; acyl groups such as an acetyl group, propionyl group, and butyryl group; γ-chloropropyl group, γ-bromopropyl group, 3,3,3-trifluoropropyl group, γ-glycidoxypropyl group, γ-(meth)acryloxypropyl group, γ-mercaptopropyl group, 2-(3,4-epoxycyclohexyl)ethyl group, vinyl group, and phenyl group can be given.

As examples of the alkyl group having 1-5 carbon atoms represented by R⁴, a methyl group, ethyl group, n-propyl group, i-propyl group, n-butyl group, i-butyl group, sec-butyl group, t-butyl group, and n-pentyl group can be given. As examples of the acyl group having 1-6 carbon atoms, an acetyl group, propionyl group, and butyryl group can be given.

As specific examples of the organosilane (2), silane alkoxides such as tetramethoxysilane, tetraethoxysilane,
tetra-n-propoxysilane, tetra-i-propoxysilane,
tetra-n-butoxysilane, tetraacetyloxysilane,
tetraphenoxysilane, methyltrimethoxysilane,
methyltriethoxysilane, ethyltrimethoxysilane,
ethyltriethoxysilane, n-propyltrimethoxysilane,
n-propyltriethoxysilane, i-propyltrimethoxysilane,
i-propyltriethoxysilane, n-butyltrimethoxysilane,
n-butyltriethoxysilane, n-pentyltrimethoxysilane,
n-pentyltriethoxysilane, cyclohexyltrimethoxysilane,
cyclohexyltriethoxysilane, phenyltrimethoxysilane, phenyltriethoxysilane,
N-(2-aminoethyl)-3-aminopropyltrimethoxysilane,
N-(2-aminoethyl)-3-aminopropyltriethoxysilane,
3-glycidoxypropyltrimethoxysilane,
3-glycidoxypropyltriethoxysilane,
2-(3,4-epoxycyclohexyl)ethyltrimethoxysilane,
2-(3,4-epoxycyclohexyl)ethyltriethoxysilane,
3-(meth)acrylicoxypropyltrimethoxysilane,
3-(meth)acrylicoxypropyltriethoxysilane,
vinyltrimethoxysilane, vinyltriethoxysilane,
allyltrimethoxysilane, vinyltriacetoxysilane,
3-chloropropyltrimethoxysilane,
3-chloropropyltriethoxysilane,
3-trifluoropropyltrimethoxysilane,
3,3,3-trifluoropropyltriethoxysilane,
3-aminopropyltrimethoxysilane, 3-aminopropyltriethoxysilane,
2-hydroxyethyltrimethoxysilane,
2-hydroxyethyltriethoxysilane,
2-hydroxypropyltrimethoxysilane,
2-hydroxypropyltriethoxysilane,
3-hydroxypropyltrimethoxysilane,
3-hydroxypropyltriethoxysilane,
3-mercaptopropyltrimethoxysilane,
3-mercaptopropyltriethoxysilane,
3-isocyanatepropyltrimethoxysilane,
3-isocyanatepropyltriethoxysilane,
3-ureidopropyltrimethoxysilane,
3-ureidopropyltriethoxysilane, methyltriacetyloxysilane, methyltriphenoxysilane,
dimethyldimethoxysilane, dimethyldiethoxysilane,
diethyldimethoxysilane, diethyldiethoxysilane,
di-n-propyldimethoxysilane, di-n-propyldiethoxysilane,
di-i-propyldimethoxysilane, di-i-propyldiethoxysilane,
di-n-butyldimethoxysilane, di-n-butyldiethoxysilane,
n-pentyl·methyldimethoxysilane,
n-pentyl·methyldiethoxysilane,
cyclohexyl·methyldimethoxysilane,
cyclohexyl·methyldiethoxysilane,
phenyl·methyldimethoxysilane, phenyl·methyldiethoxysilane,
di-n-pentyldimethoxysilane, di-n-pentyldiethoxysilane,
di-n-hexyldimethoxysilane, di-n-hexyldiethoxysilane,
di-n-heptyldimethoxysilane, di-n-heptyldiethoxysilane,
di-n-octyldimethoxysilane, di-n-octyldiethoxysilane,
dicyclohexyldimethoxysilane, dicyclohexyldiethoxysilane,
diphenyldimethoxysilane, diphenyldiethoxysilane,
dimethyldiacetyloxysilane, and dimethyldiphenoxysilane; and
acyloxysilanes such as tetraacetoxysilane,
methyltriacetoxysilane, ethyltriacetoxysilane, dimethyldiacetoxysilane, and diethyldiacetoxysilane can be given. Preferable organosilanes are tetramethoxysilane, tetraethoxysilane, methyltrimethoxysilane,
dimethyldimethoxysilane, and the like. Of these compounds, tetramethoxysilane and tetraethoxysilane are preferable. Tetraethoxysilane is particularly preferable for applications requiring long-term storage stability.

These organosilane compounds (2) may be used either individually or in combination of two or more.

In the present invention, the organosilane (2) is used as is or as a hydrolyzate and/or condensate. The hydrolyzate of organosilane (2) is not necessarily a compound in which all of the OR⁴ groups contained in the compound are hydrolyzed, but and may include a compound with only one of the groups hydrolyzed, a compound with two or more of the groups hydrolyzed, and a mixture of these compounds. The condensation product of the organosilane (2) is a compound in which the silanol groups in the hydrolyzate of the organosilane (2) are condensed to form an Si-O-Si bond. In the present invention, not all the silanol groups are necessarily condensed. The condensation products of the organosilane (2) also includes a compound in which only a small amount of silanol groups are condensed and a mixture of compounds with different degrees of condensation.

The hydrolyzate and/or condensate of the above organosilane (2) can be obtained by adding water or a mixture of water and the later-described hydrophilic organic solvent to the organosilane (2), further adding a hydrolysis/condensation catalyst such as an acid or alkali as required, and treating the mixture for 0.1-12 hours at a temperature from room temperature to 90°C. The hydrolyzate and/or condensate can also be obtained by adding the organosilane (2) to a mixture of the component (a) and water or later-described hydrophilic organic solvents when the component (a) is dissolved or dispersed in the water or later-described hydrophilic organic solvents. Because hydroxyl groups formed by hydrolysis are effective for increasing adhesion, the use of an organosilane (2) that has been hydrolyzed as the component (c) is particularly preferable for applications requiring adhesion at high humidity conditions. When tetraethoxysilane is used as the component (c) , previously hydrolyzed tetraethoxysilane is preferable since the tetraethoxysilane is difficult to be hydrolyzed by merely mixing with water.

The amount of component (c), on the basis of completely hydrolyzed condensate (i.e as SiO₂), to be incorporated in the coating composition of the present invention is 0.1 to 1,000 parts by weight, preferably 0.5 to 1,000 parts by weight, for 100 parts by weight of the component (a). An amount less than 0.1 part by weight is not desirable because adhesion of the resulting coating film with the substrate becomes insufficient under high humidity conditions, which may result in a coating film with no gas barrier properties.

A polyvinyl alcohol resin (a) inherently excels in gas barrier properties, weather resistance, resistance to organic solvents, transparency, gas barrier properties after heat treatment, and the like. The use of the component (b) with the polyvinyl alcohol resin (a) produces a coating film with superior gas barrier properties under high humidity conditions and/or after heat treatment. The further addition of the component (c) ensures a coating film exhibiting both excellent adhesion with the substrate interface and superior gas barrier properties under high humidity conditions.

### Component (d)

The coating composition of the present invention may contain a nitrogen-containing compound as a component (d), as required.

As examples of the nitrogen-containing compound as the component (d), hydrophilic nitrogen-containing organic solvents such as N,N-dimethylacetamide, N,N-dimethylformamide, γ-butyrolactone, N-methyl-2-pyrrolidone, and pyridine; nucleic acid bases such as thymine, glycine, cytosine, and guanine; hydrophilic nitrogen-containing polymers such as polyvinylpyrrolidone, polyacrylamide, and polymethacrylamide; and copolymers produced by copolymerizing these components.

Of these, N,N-dimethylacetamide, N,N-dimethylformamide, N-methyl-2-pyrrolidone, and polyvinylpyrrolidone are preferable.

The addition of the component (d) ensures not only a coating film with more transparent appearance in a thin film coating operation, but also a catalytic effect when the coating is condensed with an inorganic oxide vapor deposition layer. The amount of nitrogen-containing compound (d) to be added is usually 70 wt% or less, and preferably 50 wt% or less of the total amount of the solvents.

### Component (e)

The coating composition of the present invention may contain fine inorganic particles as a component (e) , as required. The fine inorganic particles used as the component (e) are particulate inorganic materials not substantially containing carbon atoms and having an average particle size of 0.2 µm or less. Metal oxide particles, silicon oxide particles, metal nitride particles, silicon nitride particles, and metal boride particles are given as examples. The fine inorganic particles (e), for example, silica particles, can be prepared by a vapor phase process consisting of hydrolysis of silicon tetrachloride and oxygen in hydrogen flame, a liquid phase process in which silica particles are obtained by ion exchange of sodium silicate, and a solid phase process in which silica particles are produced by pulverizing silica gel by using a mill and the like. However, the methods are not limited to these processes.

Specific compounds of the component (e) include oxides such as SiO₂, Al₂O₃, TiO₂, WO₃, Fe₂O₃, ZnO, NiO, RuO₂, CdO, SnO₂, Bi₂O₃, 3Al₂O₃·2SiO₂, Sn-In₂O₃, Sb-In₂O₃, and CoFeOₓ; nitrides such as Si₃N₄, Fe₄N, AlN, TiN, ZrN, and TaN; and borides such as Ti₂B, ZrB₂, TaB₂, and W₂B. The forms in which the inorganic oxide particles (e) are used include, but are not limited to, powder and colloid or sol in which the particles are dispersed in water or an organic solvent. Among these forms, to obtain superior coating performance by co-condensation with the components (a) and/or (b), colloidal oxide sols having hydroxyl groups on the surface of the particles, such as colloidal silica, colloidal alumina, alumina sol, tin sol, zirconium sol, antimony pentoxide sol, cerium oxide sol, zinc oxide sol, and titanium oxide sol are preferably used.

The average particle size of the inorganic oxide particles (e) is 0.2 µm or less, and preferably 0.1 µm or less. If the average particle size is more than 0.2 µm, the film may exhibit inferior gas barrier properties because of a small density.

The amount of the component (e) used in the composition of the present invention is preferably 900 parts by weight or less, and particularly preferably 400 parts by weight, for 100 parts by weight of the total amount of the components (a), (b), and (c). If more than 900 parts by weights, the resulting coating film may have poor gas barrier properties.

### Component (f)

A curing promoter (f) may be used with an objective of promoting the curing speed of the composition of the present invention and promoting easy formation of co-condensates of the components (a), (b), and (c). The addition of the curing promoter (f) is effective to ensure curing at a comparatively low temperature and obtain a denser film.

As the curing promoter (f), inorganic acids such as hydrochloric acid; alkaline metal salts of acids such as naphthenic acid, octyl acid, nitrous acid, sulfurous acid, aluminic acid, and carbonic acid; alkaline compounds such as sodium hydroxide and potassium hydroxide; acidic compounds such as alkyl titanic acid, phosphoric acid, methane sulfonic acid, p-toluene sulfonic acid, phthalic acid, succinic acid, glutaric acid, oxalic acid, and malonic acid; amines such as ethylenediamine, hexanediamine, diethylenetriamine, triethylenetetramine, tetraethylenepentamine, piperidine, piperazine, metaphenylene diamine, ethanolamine, triethylamine, various modified amines used as curing agents for epoxy resins, γ-aminopropyltriethoxysilane, γ-(2-aminoethyl)-aminopropyl trimethoxysilane, γ-(2-aminoethyl)-aminopropyl methyl dimethoxysilane, and γ-anilinopropyl trimethoxysilane, and the like can be used.

These curing promoters are usually added in an amount of 50 parts by weight or less, and preferably 30 parts by weight or less, for 100 parts by weight of the solid components in the composition of the present invention.

### Stabilizer

In addition, the above-described β-diketones and/or β-keto esters may be added to the composition of the present invention as a stabilizer. The effect of these compounds in promoting the storage stability of the resulting composition is assumed to be provided by the action of the compounds for controlling the condensation reaction among the components (a), (b), and (c) by conjugating with the metal atom in the metal alcoholate that is present in the composition as the component (b). The amount of the β-diketones and/or β-keto esters added to the composition is preferably 100 mols or less, and still more preferably 20 mols or less, for one mol of the metal atom in the component (b).

### Preparation method

The coating composition of the present invention can be obtained by dissolving or dispersing the components (a) - (c) and, as required, the above-described optional components in water and/or a hydrophilic organic solvent.

The following solvents can be given as specific examples of the hydrophilic organic solvent: monohydric or dihydric saturated aliphatic alcohols having 1-8 carbon atoms such as methanol, ethanol, n-propanol, i-propanol, n-butyl alcohol, sec-butyl alcohol, tert-butyl alcohol, diacetone alcohol, ethylene glycol, diethylene glycol, and triethylene glycol; saturated aliphatic ether compounds having 1-8 carbon atoms such as ethylene glycol monobutyl ether and ethylene glycol monoethyl ether acetate; ester compounds of dihydric saturated aliphatic alcohol having 1-8 carbon atoms such as ethylene glycol monomethyl ether acetate, ethylene glycol monoethyl ether acetate, and ethylene glycol monobutyl ether acetate; sulfur-containing compounds such as dimethyl sulfoxide; and
hydroxy carboxylic acids or esters thereof such as lactic acid, methyl lactate, salicylic acid, and methyl salicylate. Beside the hydrophilic organic solvents, ethers such as tetrahydrofuran and dioxane; ketones such as acetone, methyl ethyl ketone, cyclohexanone, and isophorone; esters such as ethyl acetate and butyl acetate; methyl cellosolve, ethyl cellosolve, butyl cellosolve, dimethyl sulfoxide, and the like can be given. Of these solvents, preferable solvents are monohydric saturated aliphatic alcohols having 1-8 carbon atoms such as methanol, ethanol, n-propanol, i-propanol, n-butyl alcohol, sec-butyl alcohol, and tert-butyl alcohol. When an ethylene-vinyl alcohol copolymer is used as the component (a), the use of n-propanol and water is particularly preferable to suppress deposition crystals of the component (a) after preparation of the coating material. It is possible to use the hydrophilic nitrogen-containing organic solvents described as the component (d) as a part or whole of the hydrophilic organic solvents.

Water and/or hydrophilic organic solvents are preferably used as a mixture of water and a hydrophilic organic solvent.

The water and/or hydrophilic organic solvents are used in the composition in an amount to make the total solid content of the solution preferably 60 wt% or less. When the composition is used for forming thin films, for example, the solid content is usually 1 to 40 wt%, and preferably 2 to 30 wt%. When the composition is used for forming thick films, the solid content is usually 5 to 50 wt%, and preferably 10 to 40 wt%. If the solid content is more than 60 wt%, storage stability of the composition tends to decrease.

It is possible to separately add and disperse fillers to the coating composition of the present invention to provide the composition with various characteristics such as the capability of producing colored coating films, thick coating films, and coating films having UV-shielding characteristics, corrosion resistance, heat resistance, and the like. The fillers do not include compounds given as the components (e) and (f).

As examples of the filler, water-insoluble pigments such as organic or inorganic pigments, as well as particulate, fibrous, or scale-like materials other than pigments, such as metals or alloys, oxides, hydroxides, carbides, nitrides, and sulfides of the metals or alloys, can be given. Specific examples of the fillers include particulate, fibrous, or scale-like iron, copper, aluminum, nickel, silver, zinc, ferrite, carbon black, stainless steel, silicon dioxide, titanium oxide, aluminium oxide, chromium oxide, manganese oxide, iron oxide, zirconium oxide, cobalt oxide, synthetic mullite, aluminium hydroxide, iron hydroxide, silicon carbide, silicon nitride, boron nitride, clay, diatomaceous earth, slaked lime, plaster, talc, barium carbonate, calcium carbonate, magnesium carbonate, barium sulfate, bentonite, mica, zinc green, chromium green, cobalt green, viridian, Guiney Green, cobalt chromium green, Scheele's green, green soil, manganese green, pigment green, ultramarine, iron blue, rock ultramarine, cobalt blue, cerulean blue, copper borate, molybdenum blue, copper sulfide, cobalt purple, Mars purple, manganese purple, pigment violet, lead suboxide, calcium plumbate, zinc yellow, lead sulfate, chromium yellow, yellow ocher, cadmium yellow, strontium yellow, titanium yellow, litharge, pigment yellow, cupric oxide, cadmium red, selenium red, chromium vermilion, red iron oxide, zinc white, antimony white, basic lead sulfate, titanium white, lithopone, lead silicate, zircon oxide, tungsten white, lead zinc white, lead phthalate, manganese white, lead sulfate, graphite, bone black, diamond black, thermatomic black, vegetable black, potassium titanate whisker, and molybdenum disulfide.

The average particle size or average length of these fillers is usually from 50 to 50,000 nm, and preferably from 100 to 5,000 nm.

The proportion of the fillers in the composition is preferably from 0 to 300 parts by weight, and still more preferably from 0 to 200 parts by weight for 100 parts by weight of the total solid content in the composition.

It is also possible to add a silane coupling agent to the gas barrier coating composition of the present invention to further increase adhesion of the cured coating film to the substrate.

As silane coupling agents, amino group-containing silane coupling agents, epoxy group-containing silane coupling agents, and isocyanurate group-containing silane coupling agents are preferable. The following compounds can be given as specific examples of the amino group-containing silane coupling agent:
aminopropyltrimethoxysilane,
aminopropyltriethoxysilane,
aminopropylmethyldimethoxysilane,
aminopropylmethyldiethoxysilane,
N-phenyl-γ-aminopropyltrimethoxysilane,
N-butyl-γ-aminopropyltrimethoxysilane,
N-β-(aminoethyl)-γ-aminopropyltrimethoxysilane,
N-β-(aminoethyl)-γ-aminopropylmethyldimethoxysilane,
N-β-(aminoethyl)-γ-aminopropyltriethoxysilane,
N-(6-aminohexyl)-γ-aminopropyltrimethoxysilane,
N-(6-aminohexyl)-γ-aminopropylmethyldimethoxysilane,
N-(6-aminohexyl)-γ-aminopropyltriethoxysilane,
N-[styryl(aminomethyl)] γ-aminopropyltrimethoxysilane,
N-[styryl(aminomethyl)]γ-aminopropylmethyldimethoxysilane,
N-[styryl(aminomethyl)] γ-aminopropyltriethoxysilane,
N[N-β-(aminoethyl)aminoethyl]γ-aminopropyltrimethoxysilane,
N[N-β-(aminoethyl)aminoethyl]γ-aminopropylmethyldimethoxysi lane,
N[N-β-(aminoethyl)aminoethyl]γ-aminopropyltriethoxysilane,
N[N-(benzylmethyl)aminoethyl]γ-aminopropyltrimethoxysilane,
N[N-(benzylmethyl)aminoethyl]γ-aminopropylmethyldimethoxysilane,
N[N-(benzylmethyl)aminoethyl]γ-aminopropyltriethoxysilane,
N[N-(benzyl)aminoethyl]γ-aminopropyltrimethoxysilane,
N[N-(benzyl)aminoethyl]γ-aminopropylmethyldimethoxysilane,
N[N-(benzyl)aminoethyl]γ-aminopropyltriethoxysilane,
N-phenylaminopropyltrimethoxysilane,
N-phenylaminopropylmethyldimethoxysilane,
N-phenylaminopropyltriethoxysilane,
N-phenylaminomethyltrimethoxysilane,
N-phenylaminomethylmethyldimethoxysilane,
N-phenylaminomethyltriethoxysilane,
bis(trimethoxysilylpropyl)amine,
p-[N-(2-aminoethyl)aminomethyl]phenethyltrimethoxysilane,
N-[(3-trimethoxysilyl)propyl]diethylenetriamine,
N-[(3-trimethoxysilyl)propyl]triethylenetetramine,
and N-3-trimethoxysilylpropyl-m-phenylenediamine.

Among these, aminopropyltrimethoxysilane, aminopropyltriethoxysilane,
N-β-(aminoethyl)-γ-aminopropyltrimethoxysilane,
N-β-(aminoethyl)-γ-aminopropylmethyldimethoxysilane,
and N-β-(aminoethyl)-γ-aminopropyltriethoxysilane are particularly preferred. As specific examples of the epoxy group-containing silane coupling agent,
γ-glycidoxypropyltrimethoxysilane,
γ-glycidoxypropylmethyldimethoxysilane,
γ-glycidoxypropyltriethoxysilane,
γ-glycidoxypropylmethyldiethoxysilane,
and β-(3,4-epoxycyclohexyl)ethyltrimethoxysilane can be given.
Of these, γ-glycidoxypropyltrimethoxysilane and γ-glycidoxypropyltriethoxysilane are particularly preferred. As specific examples of the isocyanurate group-containing silane coupling agent, (trimethoxysilylpropyl)isocyanurate,
(trimethoxysilylpropyl)isocyanurate,
(triisopropoxysilylpropyl)isocyanurate,
1,3-bis(trimethoxysilylpropyl)isocyanurate,
1,3-bis(triethoxysilylpropyl)isocyanurate,
1,3-bis(triisopropoxysilylpropyl)isocyanurate,
1,5-bis(trimethoxysilylpropyl)isocyanurate,
1,5-bis(triethoxysilylpropyl)isocyanurate,
1,5-bis(triisopropoxysilylpropyl)isocyanurate,
1,3,5-tris(trimethoxysilylpropyl)isocyanurate,
1,3,5-tris(triethoxysilylpropyl)isocyanurate,
and 1,3,5-tris(triisopropoxysilylpropyl)isocyanurate can be given. Among these,
1,3,5-tris(trimethoxysilylpropyl)isocyanurate and
1,3,5-tris(triethoxysilylpropyl)isocyanurate are
particularly preferred.

These silane coupling agents can be used individually or in combination of two or more. The amount of the silane coupling agent used in the gas barrier coating composition of the present invention is 0-50 wt%, and preferably 0-20 wt% of the total amount of the components (a), (b), and (c).

In addition to the above components, methyl orthoformate, methyl orthoacetate, known dehydrating agents, various surfactants, silane coupling agents other than those mentioned above, titanium coupling agents, dyes, dispersants, thickeners, leveling agents, and the like may be optionally added.

The coating composition of the present invention can be obtained by mixing the above essential components (a), (c), and (b) and the above optional components (d) - (f) . It is desirable that the component (c) among the essential components be previously hydrolyzed in water or a mixed solvent of water and a hydrophilic organic solvent. The hydrolyzing process usually comprises adding water or a mixture of water and the later-described hydrophilic organic solvent to the organosilane (2), further adding a hydrolysis/condensation catalyst such as an acid or alkali as required, and treating the mixture for 0.1-12 hours at a temperature from room temperature to 90°C. The hydrolyzate can also be obtained by adding the organosilane (2) to a mixture of the component (a) and water or later-described hydrophilic organic solvents when the component (a) is dissolved or dispersed in the water or later-described hydrophilic organic solvents.

When the above component (b) is added, the component (b) also is preferably hydrolyzed in water or a mixed solvent of water and a hydrophilic organic solvent in advance before mixing with the component (a) and component (c). This method of preparation ensures production of a coating composition exhibiting no change in the viscosity over time and easy to handle.

The hydrolysis reaction is usually carried out at a temperature from room temperature to 80°C, and preferably from room temperature to 60°C, for about 0.1 to 24 hours, and preferably about 0.5 to 10 hours.

The following methods (1)-(4) can be given as specific examples of the method of preparing the coating composition of the present invention when the component (e) is used. In these methods, a compound previously hydrolyzed in water or a mixed solvent of water and a hydrophilic organic solvent can be used as the component (b).

Method (1): A method of dissolving the component (a) in water and/or a hydrophilic organic solvent, adding the component (e) to the solution, and adding the components (b) and (c) .

Method (2) : A method of dissolving the component (a) in water and/or a hydrophilic organic solvent, adding the components (b) and (c) to the solution, and adding the component (e) to effect hydrolysis and/or condensation.

Method (3): A method of dissolving the component (b) in water and/or a hydrophilic organic solvent, adding the component (e) to the solution to effect hydrolysis and/or condensation, and adding the components (a) and (c).

Method (4): A method of adding the components (a)-(c) and the component (e) at the same time to water and/or a hydrophilic organic solvent to dissolve or disperse these components, and optionally hydrolyze and/or condense the products.

### Coating film

The coating composition of the present invention is particularly useful as a gas barrier coating material.

Specifically, a coating film with superior gas barrier properties can be obtained by laminating cured films of the coating composition of the present invention or by laminating vapor deposition layers of an inorganic oxide and cured films of the coating composition on a resin substrate film.

The substrate films for forming the gas barrier coating film of the present invention include, for example, films and sheets of various resins such as a polyolefin resin (e.g. polyethylene, polypropylene), polyester resin (e.g. polyethylene terephthalate, polyethylene naphthalate), polyamide resin, polycarbonate resin, polystyrene resin, polyvinyl alcohol resin (e.g. polyvinyl alcohol, saponified parts of ethylene-vinyl acetate copolymer), polyacrylonitrile resin, polyvinyl chloride resin, polyvinyl acetal resin, polyvinyl butyral resin, and fluorine-containing resin. For forming films or sheets from the above resins, a method of forming a film from one of such resins by means of an inflation method, T-die method or other filming method, a method of forming a film from two or more different types of resins by multi-layer extrusion, a method of forming a film from a mixture of two or more resins, and the like are employed. The uniaxially or biaxially stretched films and sheets may be prepared by processing the resulting films or sheets by a tenter method or tubular method, for example.

The thickness of the substrate film used in the present invention is preferably from about 5 to 200 µm, and still more preferably from about 10 to 50 µm. Various plastic and other additives may be added in the above film forming process to improve various characteristics of the film such as processability, heat resistance, weather resistance, mechanical properties, dimensional stability, oxidation resistance, slip characteristics, releasability, flame retardance, antifungal properties, and electrical characteristics. The amount of addition may vary from a very small amount to several tens of wt% according to the object. Included in general additives are lubricants, crosslinking agents, antioxidants, UV absorbers, fillers other than those mentioned above, strengthening agents, reinforcing agents, antistatic agents, flame retardants, flame-resistant agents, foaming agents, fungicides, and pigments.

As required, the surface of substrate films used in the present invention may be previously treated by means of, for example, corona discharge processing, ozone processing, low temperature plasma processing using oxygen gas or nitrogen gas, glow discharge processing, and oxidation treatment using chemicals. The surface pretreatment may be carried out as a separate process step before forming a vapor deposition layer of an inorganic oxide or, in the case of low temperature plasma processing, glow discharge processing, and the like may be effected as an inline pretreatment before forming a vapor deposition layer of the inorganic oxide. In this instance, the manufacturing cost can be reduced. Although the surface pretreatment of the present invention is carried out as a means for improving adhesion of the substrate film to a vapor deposition layer of an inorganic oxide, it is possible to previously form other layers on the surface of the substrate film to improve the adhesion, such as a primer coating agent layer, under coating agent layer, and vapor deposition anchor coating agent layer. As the material for the coating agent layer for the pretreatment, a resin composition containing a polyester resin, polyurethane resin, or another resin as a major component of vehicle can be given.

The above coating agent layers can be formed by the roll coating method, gravure roll coating method, kiss coating method, or other coating method using a solvent coating agent, aqueous coating agent, emulsion coating agent, and the like, either after biaxial stretching of the substrate film or in an inline biaxial stretching step. A biaxially stretched polypropylene film, biaxially stretched polyethylene terephthalate film, or biaxially stretched nylon film can be used as the substrate film in the present invention.

In this instance, it is possible to produce a vapor deposition layer of metal and/or inorganic compound (hereinafter referred to as "vapor deposition layer") on the substrate or the coating film of the present invention. Gas barrier properties are improved by providing such a vapor deposition layer.

The vapor deposition layer increases adhesion of the vapor deposition layer to the gas barrier coating layer by forming chemical bonds, hydrogen bonds, coordinate bonds, and the like due to hydrolysis/co-condensation reaction of the vapor deposition layer and the components (a) to (c).

As the vapor deposition layer, a vapor deposition layer of an inorganic oxide by chemical vapor deposition and/or physical vapor deposition is preferable.

The vapor deposition of an inorganic oxide by the chemical vapor deposition method for the gas barrier coating film of the present invention will now be described. As the inorganic oxide vapor deposition layers by the chemical vapor deposition method, inorganic oxide vapor deposition layers can be formed by the chemical vapor deposition method (CVD method) such as a plasma CVD method, heat CVD method, and photo CVD method. In a specific embodiment of the present invention, such an inorganic oxide vapor deposition layer is formed on one surface of the substrate film by the plasma CVD method using a vapor deposition monomer gas of an organic silicon compound as a raw material, an inert gas such as argon gas or helium gas as a carrier gas, and oxygen gas as an oxygen supply source in a low temperature plasma generator, for example. As the low temperature plasma generator, a high frequency plasma generator, pulse wave plasma generator, microwave plasma generator, and the like can be given. In order to obtain highly active and stable plasma in the present invention, a high frequency plasma generator is preferable.

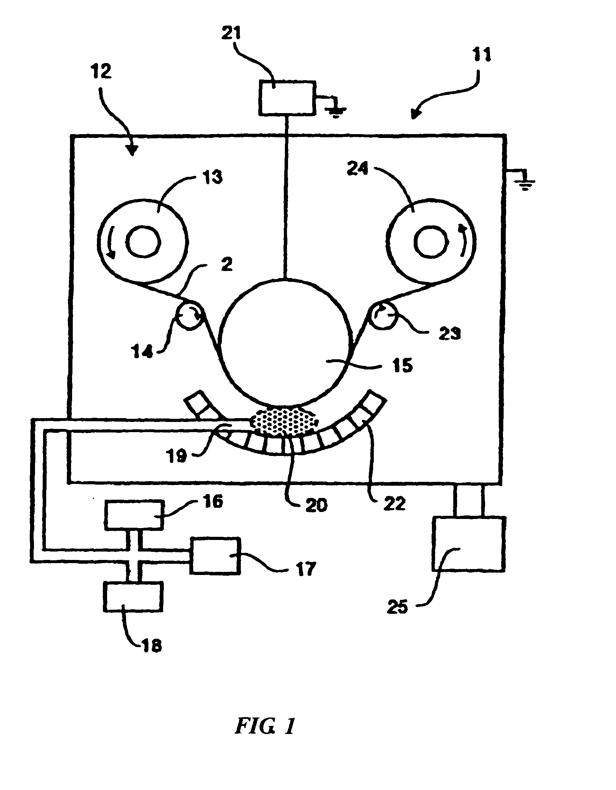

One embodiment of forming an inorganic oxide vapor deposition layer by the low temperature plasma CVD method will be described referring to the drawing. Fig. 1 shows an outline configuration of a low temperature plasma CVD apparatus used for forming an inorganic oxide vapor deposition layer by the plasma CVD method.

As shown in Fig. 1, a substrate film 2 is unreeled from a winding roller 13 disposed in a vacuum chamber 12 of a plasma CVD apparatus 11 and carried to the circumference of a cooler-electrode drum 15 via an auxiliary roller 14 at a prescribed speed.

Oxygen gas, inert gas, monomer gas for vapor deposition such as an organic silicon compound, and other materials are supplied from gas supply apparatuses 16, 17, and a raw material vaporization/supply apparatus 18, and the like, to prepare a mixed gas composition for vapor deposition, which is introduced into the chamber 12 via a raw material feed nozzle 19. The substrate film 2 delivered onto the circumference of the cooler-electrode drum 15 is irradiated with plasma generated by a glow discharge plasma 20 to form a continuous film of an inorganic oxide such as silicon oxide.

In the present invention, the cooler-electrode drum 15 is charged with prescribed electricity by a power source 21 disposed outside the chamber. In addition, a magnet 22 disposed near the cooler-electrode drum 15 accelerates the plasma generation. The substrate film 2 on which the continuous film of an inorganic oxide such as silicon oxide had been formed is then wound around the winding roller 24 via an auxiliary roller 23, thereby obtaining the vapor deposition layer of an inorganic oxide by the CVD method of the present invention. In the figure, 25 indicates a vacuum pump.

The above embodiment is one example of the present invention and should not be construed as limiting the present invention.

Although not shown in the drawing, the inorganic oxide vapor deposition layer of the present invention is not necessarily a one layer continuous film of an inorganic oxide, and may be a composite vapor deposition layer consisting of two or more laminated layers. In addition, it is possible to use a raw material consisting of either one material or a mixture of two or more materials. Moreover, a vapor deposition layer may be made from a mixture of different types of inorganic oxide.

In the above operation, the vacuum chamber 12 is depressurized using the vacuum pump 25 to a pressure from about 1x10⁻¹ to 1x10⁻⁸ Torr, and preferably 1x10⁻³ to 1x10⁻⁷ Torr.

In the raw material volatilization-supply apparatus 18, the raw material organic silicon compound is volatilized and mixed with oxygen gas, inert gas, and the like supplied from the gas supply apparatuses 16, 17. The gas mixture is introduced into the chamber 12 via a raw material feed nozzle 19.

In this instance, the amounts of organic silicon compound, oxygen gas, and inert gas are respectively about 1-40 mol%, 10-70 mol%, and 10-60 mol%, and the molar ratio of the organic silicon compound, oxygen gas, and inert gas is from about 1:6:5 to 1:17:14.

On the other hand, because the cooler-electrode drum 15 is charged with a prescribed voltage by the power source 21, glow discharge plasma 20 is produced in the neighborhood of the opening of the raw material feed nozzle 19 and the cooler-electrode drum 15 in the chamber 12. The glow discharge plasma 20 is derived from one or more gas components in the gas mixture. If the substrate film 2 is carried under this condition, a vapor deposition layer of an inorganic oxide such as silicon oxide can be formed on the substrate film 2 around the circumference of the cooler-electrode drum 15 by glow discharge plasma 20.

In this instance, the degree of vacuum used in the vacuum chamber 12 is adjusted in the range from 1x10⁻¹ to 1x10⁻⁴ Torr, and preferably from about 1x10⁻¹ to 1x10⁻² Torr. The carriage speed of the substrate film 2 is adjusted in the range from 10 to 300 m/min, and preferably from about 50 to 150 m/min.

In the above plasma CVD apparatus 11, the continuous film of an inorganic oxide such as silicon oxide is formed on the substrate film 2 as a thin film of SiOₓ by the oxidation of the raw material gas plasma using oxygen gas. The vapor deposition layer of an inorganic oxide such as silicon oxide forms a dense and highly flexible continuous layer with few voids. Therefore, the vapor deposition layer of an inorganic oxide such as silicon oxide has gas barrier properties much higher than the vapor deposition layers formed by the conventional vacuum vapor deposition method.

In addition, since the SiOₓ plasma cleans the surface of the substrate film 2 and produces polar groups and free radicals on the surface, the resulting vapor deposition layer of the inorganic oxide such as silicon oxide exhibits high adhesion with the substrate film.

The degree of vacuum used in forming the vapor deposition layer of an inorganic oxide such as silicon oxide is from about 1x10⁻¹ to 1x10⁻⁴ Torr, and preferably from about 1x10⁻¹ to 1x10⁻² Torr. This degree of vacuum is less than the degree of vacuum used in forming the vapor deposition layer of an inorganic oxide such as silicon oxide according to the conventional method (which is from about 1x10⁻⁴ to 1x10⁻⁵ Torr). Therefore, the time requiring for establishing the vacuum conditions during the replacement of the substrate film is reduced and the degree of vacuum is easily stabilized, resulting in a stable film-forming process.

The silicon oxide vapor deposition layer of the present invention formed from vapor deposition monomer gas such as an organic silicon compound has the reaction product of the vapor deposition monomer gas, oxygen gas, and the like adhered to one of the surfaces of the substrate film. The adhering reaction product forms a dense and flexible thin film, which is usually a continuous thin film containing silicone oxide represented by SiOₓ, wherein x is an integer of 0 to 2, as a main component.

In view of transparency, gas barrier properties, and the like, the above silicon oxide vapor deposition layer is preferably a thin film containing a continuous film of silicon oxide represented by SiOₓ, wherein x is 1.3-1.9, as a main component.

The value of x varies according to the molar ratio of vapor deposition monomer gas to oxygen gas, plasma energy, and the like. Generally, the smaller the value, the smaller the gas permeability. However, the film is yellowish and has poor transparency.

The above silicon oxide vapor deposition layer is further characterized by forming a continuous film comprising silicon oxide, as a major component, and containing at least one compound composed of one or more elements such as carbon, hydrogen, silicon, and oxygen chemically bonded thereto.

For example, such a compound may be a compound having a C-H bond or Si-H bond. In some cases, the carbon units are in the form of graphite, diamond, or fullerene. Some films may contain a chemically bonded raw material organic silicon compound or derivatives thereof.

Hydrocarbons having CH₃- sites, hydrosilicas such as SiH₃ (silyl), SiH₂ (silylene), and SiH₂OH (silanol) can be given as specific examples.

Beside the above, the types, amounts, and the like of compounds contained in the silicon oxide vapor deposition layer may be changed by changing the vapor deposition conditions.

The amount of these compounds in the silicon oxide vapor deposition layer is from about 0.1 to 50 mol%, and preferably from about 5 to 20 mol%. If less than 0.1 mol%, the impact resistance, spreadability, flexibility, and the like are insufficient. The product easily produces scratches and cracks due to bending or the like, making it difficult to maintain high gas barrier properties in a stable manner. On the other hand, the amount of these compounds of more than 50 mol% is undesirable, because the gas barrier properties decline.

In addition, the content of the above compounds should preferably decrease from the surface to the inside of the silicon oxide vapor deposition layer. This ensures high impact strength on the surface of the silicon oxide vapor deposition layer and high adhesion of the silicon oxide vapor deposition layer to the substrate film because of a decreased content of the above compounds in the interface with the substrate film.

These properties can be confirmed by elementary analysis of the silicon oxide vapor deposition layer by means of an analytical method comprising ion etching and the like in the depth direction of the film using surface analysis methods such as X-ray photoelectron spectroscopy (XPS) and secondary ion mass spectroscopy (SIMS).

The thickness of the silicon oxide vapor deposition layer of the present invention is preferably from about 5 to 400 nm, and more preferably from about 10 to 100 nm. If the thickness is less than 10 nm, it is difficult for the film to have gas barrier properties. This tendency is even more conspicuous if the thickness is less than 5 nm. If the thickness is more than 100 nm, the film may easily produce cracks and the like. The tendency is even more conspicuous if the thickness is more than 400 nm.

The film thickness can be measured by a fundamental parameter method using a fluorescent X-ray analyzer ("RIX 2000" manufactured by Rigaku Corporation).

The thickness of the silicon oxide vapor deposition layer may be changed by increasing the volumetric speed of the vapor deposition layer, specifically by increasing the amount of monomer gas and oxygen gas, or by reducing the vapor deposition speed.

As examples of the organic silicon compound for the monomer gas for forming the vapor deposition layer of an inorganic oxide such as silicon oxide,
1,1,3,3-tetramethyldisiloxane, hexamethyldisiloxane,
vinyltrimethylsilane, methyltrimethylsilane, hexamethyldisilane, methylsilane, dimethylsilane, trimethylsilane, diethylsilane, propylsilane, phenylsilane, vinyltriethoxysilane, vinyltrimethoxysilane, tetramethoxysilane, tetraethoxysilane, phenyltrimethoxysilane, methyltriethoxysilane, and octamethylcyclotetrasiloxane can be given.

Among the above organic silicon compounds, 1,1,3,3-tetramethyldisiloxane and hexamethyldisiloxane are particularly preferable raw materials in view of ease in handling, properties of the formed continuous film, and the like.

As the inert gas, argon gas, helium gas, and the like can be used.

The vapor deposition layer of inorganic oxide for the gas barrier coating film of the present invention may also be formed by a physical vapor deposition (PVD) method such as the vacuum vapor deposition method, spattering method, and ion plating method. Specific methods are the vacuum vapor deposition method using a metal oxide as a raw material, which is heated to vaporize and deposited onto a substrate film, an oxidation reaction vapor deposition method using a metal or metal oxide as a raw material, which is oxidized by introducing oxygen and deposited onto a substrate film, a plasma-assisted oxidation reaction vapor deposition method in which the oxidation reaction is accelerated by plasma, and the like.

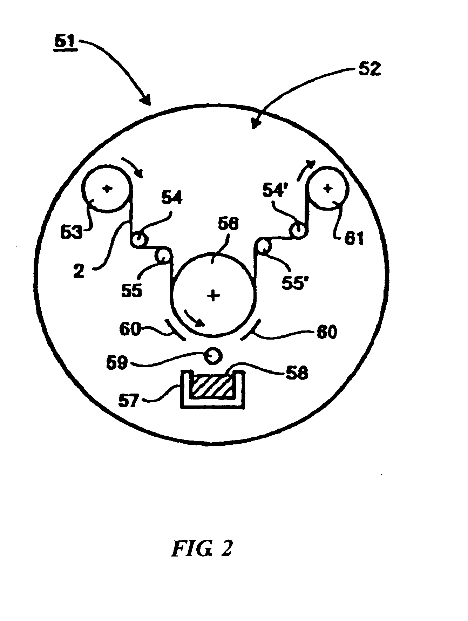

Fig. 2 shows an example of forming a vapor deposition layer of an inorganic oxide using the PVD method. In the sketch of a reel-type vacuum vapor deposition apparatus 51 shown in Fig. 2, in a vacuum chamber 51, a substrate film 2 having a vapor deposition layer of inorganic oxide produced by the CVD method is reeled out from a winding roller 53 and sent to a cooled coating drum 56 via guide rollers 54,55. A vapor deposition source 58, such as metallic aluminum or aluminum oxide, is heated in a crucible 57 and vaporized through masks 60 onto the vapor deposition layer formed by the CVD method, while oxygen gas or the like is injected from an oxygen gas injection port 59, as required, thereby forming a vapor deposition layer of an inorganic oxide such as aluminum oxide. The substrate film 2 on which the vapor deposition layer of an inorganic oxide has been formed by the PVD method is then sent via guide rollers 55', 54' and wound around a winding roller 61.

Any thin film with a metal oxide deposited by vapor deposition can be used as the vapor deposition layer. As examples of the metal oxide which can be used, metal oxides of silicon (Si), aluminum (Al), magnesium (Mg), calcium (Ca), potassium (K), tin (Sn), sodium (Na), boron (B), titanium (Ti), lead (Pb), zirconium (Zr), and yttrium (Y) can be given. Metal oxides of silicon (Si), aluminum (Al), and the like are given as suitably used for packaging materials. The metal oxides forming the vapor deposition layer may be generally indicated by MOₓ (wherein M is a metal element and x is a value with a specific range for each metal), such as SiOₓ (silicon oxide), AlOₓ (aluminum oxide), and MgOₓ (magnesium oxide) . The range for the value x can be 0-2 for silicon (Si), 0-1.5 for aluminum (Al), 0-1 for magnesium (Mg), 0-1 for calcium (Ca), 0-0.5 for potassium (K), 0-2 for tin (Sn), 0-0.5 for sodium (Na), 0-1.5 for boron (B), 0-2 for titanium (Ti), 0-1 for lead (Pb), 0-2 for zirconium (Zr), and 0-1.5 for yttrium (Y). When x=0, the vapor deposition layer is a complete metal film which is not transparent. Such a vapor deposition layer cannot be used in the present invention. The upper limit for the range of X is the value that completely oxidizes the metal. Metal oxides other than silicon (Si) and aluminum (Al) are rarely used for packaging materials. The value x is preferably 1.0-2.0 for silicon (Si) and 0.5-1.5 for aluminum (Al). The thickness of the thin film of an inorganic oxide varies according to the type of the metal or metal oxide used and may be arbitrarily selected from the range of 5-200 nm, and preferably 10-100 nm.

Either one layer of the vapor deposition layer of an inorganic oxide or a lamination of two or more layers of such film may be used in the present invention. In addition, a mixture of two or more metals or metal oxides may be used to form a thin film of a mixture of different types of inorganic oxides.

The following methods can be given as specific examples of forming a coating film from the coating composition of the present invention.
(1) A method of forming a coating film of the present invention on the surface of a substrate. As required, a primer may be applied on the surface before forming the coating film of the present invention.
(2) A method of forming a vapor deposition layer of inorganic oxide on the surface of a substrate by the CVD method and/or PVD method, and then forming a coating film of the present invention on the vapor deposition layer. As required, a primer may be applied on the surface before forming the vapor deposition layer.
(3) A method of forming a vapor deposition layer of inorganic oxide by the CVD method and/or PVD method on the coating film of the present invention prepared by the method (1).
(4) A method of forming a vapor deposition layer of inorganic oxide by the CVD method and/or PVD method on the coating film of the present invention prepared by the method (2).
(5) A method of forming another coating film of the present invention on the surface of the vapor deposition layer prepared in the method (3) above.
(6) A method of forming another coating film of the present invention on the surface of the vapor deposition layer prepared in the method (4) above.
(7) A method of forming the coating film of any one of (1)-(6) on either one side or both sides of the substrate.

To laminate a cured film of the gas barrier coating composition of the present invention on a substrate of a synthetic resin film or the like (including the substrate on which the above vapor deposition layer has been formed), the coating of the present invention is formed by applying the composition using a coating means such as roll coating (e.g. gravure coating), spray coating, spin coating, dipping, brushing, bar coating, or applicator coating, either once or twice or more, to produce the coating of the present invention with a dry thickness of 0.01-30 µm, and preferably 0.1-10 µm. The coating is then dried with heating in ordinary circumstances at a temperature of 50-300°C, and preferably 70-200°C, for 0.005-60 minutes, and preferably 0.01-10 minutes, whereby the condensation reaction takes place to form the coating film of the present invention.

An adhesion improver such as an anchor coating agent may be applied before laminating the cured film of the gas barrier coating composition of the present invention. As the anchor coating agent, an organotitanium anchor coating agent such as alkyl titanate, an isocyanate anchor coating agent, a polyethylene imine anchor coating agent, a polybutadiene anchor coating agent, and various other aqueous and oily anchor coating agents can be used.

If required, an image printing layer is formed on the gas barrier coating film of the present invention. In addition, it is possible to produce a layer of a heat seal resin on the image printing layer.

As the image printing layer, characters, figures, patterns, signs, and other desired images are printed using a common rotogravure ink composition, offset ink composition, letterpress ink composition, screen ink composition, and other ink compositions by means of gravure printing, offset printing, letterpress printing, silk screen printing, and other printing methods. As a vehicle for forming the ink composition, polyolefin resins such as polyethylene resin, chlorinated polypropylene resin, poly(meth)acrylic resin, polyvinyl chloride resin, polyvinylacetate resin, vinyl chloride-vinyl acetate copolymer, polystyrene resin, styrene-butadiene copolymer, vinylidene fluoride resin, polyvinyl alcohol resin, polyvinylacetal resin, polyvinylbutyral resin, polybutadiene resin, polyester resin, polyamide resin, alkyd resin, epoxy resin, unsaturated polyester resin, thermoset poly(meth)acrylic resin, melamine resin, urea resin, polyurethane resin, phenol resin, xylene resin, maleic acid resin, fiber resins such as nitrocellulose, ethylcellulose, acetylbutylcellulose, and ethyloxyethyl cellulose, rubbery resins such as chlorinated rubber and cyclized rubber, petroleum resins, natural resins such as rosin and casein, oils and fats such as linseed oil and soybean oil, and the like can be used individually or in combination of two or more. The ink composition used in the present invention may comprise the above-described one or more vehicles as a major component, one or more coloring agents such as a dye and pigment, and other optional additives such as a filler, stabilizer, plasticizer, antioxidant, photostabilizer such as a UV absorber, dispersant, thickener, desiccant, lubricant, antistatic agent, and crosslinking agent. These components are mixed with a solvent, diluent, and the like and sufficiently kneaded to prepare various forms of the ink composition.

Any resin which becomes molten and fused with heating can be used as a heat seal resin for forming the above heat seal resin layer. Examples of such a heat seal resin include low-density polyethylene, middle density polyethylene, high density polyethylene, straight chain (linear) low-density polyethylene, polypropylene, ethylene-vinyl acetate copolymer, ionomer resin, ethylene-ethyl acrylate copolymer, ethylene-acrylic acid copolymer, ethylene-methacrylic acid copolymer, ethylene-propylene copolymer, methylpentene polymer, acid-modified polyolefin resins such as polyethylene and polypropylene resins modified with acrylic acid, methacrylic acid, maleic acid, maleic anhydride, fumaric acid, itaconic acid, and other unsaturated carboxylic acids, polyvinyl acetate resin, polyester resin, and polystyrene resin. These resins may be used either individually or in combination of two or more. The heat seal resin layer in the present invention is produced by applying a film or sheet prepared by an inflation method, a T-die method, or other similar methods from one or more of the above-mentioned resins to the gas barrier coating of the present invention by melt fusion or by applying a resin composition containing one or more of the above-mentioned resins as a major vehicle component to the gas barrier coating and heat sealing the resin composition. The film thickness is about 5-100 µm, and preferably about 10-50 µm.

Among the above resins, linear (straight chain) low-density polyethylene is particularly preferable in the present invention. The linear (straight chain) low-density polyethylene produces few spreading cracks due to the tackiness, thereby exhibiting an advantage of improved impact resistance. The use of this material as a heat seal resin is effective for preventing deterioration of the gas barrier coating of the present invention due to oils, other food components, and the like, since the inner layer is always in contact with the contents. The other resins may be blended with the linear (straight chain) low-density polyethylene. If an ethylene-butene copolymer, for example, is blended, although heat resistance is slightly impaired and sealing stability tends to decrease under a high temperature environment, the tearing strength is reduced, resulting in easy-to-open packages. As such a linear (straight chain) low-density polyethylene for heat sealing, an ethylene-α-olefin copolymer obtained by polymerization using a metallocene catalyst can be given. Such ethylene-α-olefin copolymers obtained by polymerization using a metallocene catalyst are commercially available under the trademarks "Kernel" (manufactured by Mitsubishi Chemical Corp.), "Evolue" (manufactured by Mitsui Petrochemical Industries, Ltd.), "EXACT" (manufactured by Exxon Chemical of the US), "AFFINITY" and "Engage" (manufactured by Dow Chemical of the US). The ethylene-α-olefin copolymers obtained by polymerization using a metallocene catalyst bring about an advantage of employing low temperature heat sealing in manufacturing packages.

Since the containers for packages are usually subjected to severe conditions both physically and chemically, the laminated materials in which the gas barrier coating film of the present invention is used must satisfy stringent package requirements such as hardness resisting deformation, drop impact strength, anti-pinhole properties, heat resistance,
sealing properties, quality preservation, processability, and sanitation. Therefore, to formulate a desired composition of the laminated material, materials satisfying the above conditions are arbitrarily selected in addition to the materials essential in forming the laminated materials. For example, films and sheets of known resins such as low-density polyethylene, middle-density polyethylene, high-density polyethylene, linear low-density polyethylene, polypropylene, ethylene-propylene copolymer, ethylene-vinyl acetate copolymer, ionomer resin, ethylene-ethyl acrylate copolymer, ethylene-acrylic acid or methacrylic acid copolymer, methylpentene polymer, polybutene resin, polyvinyl chloride resin, polyvinyl acetate resin, polyvinylidene chloride resin, vinyl chloride-vinylidene chloride copolymer, poly(meth)acrylic resin, polyacrylonitrile resin, polystyrene resin, acrylonitrile-styrene copolymer (AS resin), acrylonitrile-butadiene-styrene copolymer (ABS resin), polyester resin, polyamide resin, polycarbonate resin, polyvinyl alcohol resin, saponified ethylene-vinyl acetate copolymer, fluorine-containing resin, diene resin, polyacetal resin, polyurethane resin, and cellulose nitrate are arbitrarily selected and used. Other materials such as cellophane films and synthetic paper may also be used. These films and sheets may not be stretched or may be stretched either monoaxially or biaxially. The thickness of the sheets and films are selected from a range of several microns to 300 µm, although the specific thickness is optional. Films and sheets with any properties produced by an extrusion method, inflation method, or coating method can be used.

As the method for producing the laminate of the present invention using the gas barrier film, image printing layer, heat seal resin layer, and other materials of the present invention, a dry lamination method using an adhesive for lamination, in which these layers are laminated via a layer of the adhesive for lamination, an extrusion lamination method using a melt extrusion adhesive resin in which these layers are laminated via a layer of the melt extrusion adhesive resin, and the like can be given. As examples of the adhesive for lamination, solvent-type, aqueous-type, and emulsion-type adhesives for lamination, including a one-liquid or two-liquid type, curing or non-curing vinyl adhesive, (meth)acrylic adhesive, polyamide adhesive, polyester adhesive, polyether adhesive, polyurethane adhesive, epoxy adhesive, and rubber adhesive, can be given. These adhesives for lamination can be applied by a direct gravure roll coating method, gravure roll coating method, kiss coating method, reverse roll coating method, Fontain method, transfer roll coating method, and the like. The amount of coating is preferably in the range of about 0.1-10 g/m² (dry conditions), and more preferably about 1-5 g/m² (dry conditions). An adhesive accelerator such as a silane coupling agent may be optionally added to these adhesives for lamination. As the melt extrusion adhesive resin, the same resins mentioned above in connection with the heat seal resins for forming the heat seal resin layers can be used, with low-density polyethylene, particularly linear low-density polyethylene and acid-modified polyethylene, being preferable. The thickness of the melt extrusion adhesive resin layer is preferably in the range of about 5-100 µm, and more preferably about 10-50 µm. An adhesive improver such as an anchor coating agent may be used to obtain a larger adhesion strength of lamination in the present invention. As the anchor coating agent, an organotitanium anchor coating agent such as alkyl titanate, an isocyanate anchor coating agent, a polyethylene imine anchor coating agent, a polybutadiene anchor coating agent, and various other aqueous and oily anchor coating agents can be used. The layer of anchor coating agent can be formed by applying the anchor coating agent by roll coating, gravure coating, knife coating, dip coating, spray coating, or other coating methods and drying the coating to remove solvents, diluents, and the like. The amount of anchor coating agent to be applied is preferably in the range of 0.1-5 g/m² (dry conditions).

Comparing the CVD method with the PVD method, the CVD method can produce vapor deposition layers containing a larger amount of organic components and hydroxyl groups and exhibiting better adhesion with the gas barrier coating layer.

The oxygen permeability of the gas barrier coating film of the present invention prepared by the method described above is 1.5 cm³/m²·atm·24 hr or less at 23°C and 90% RH. The oxygen permeability is measured using an oxygen permeability measuring device such as "OX-TRAN 2/20" manufactured by MOCON Inc. of the US) under the conditions of a temperature of 23°C and RH of 90%.

The gas barrier coating film and the laminate of the present invention can be used for manufacturing packaging containers for filling and packing various types of goods. The gas barrier coating film of the present invention exhibits superior gas barrier properties against oxygen, vapor, and the like, excellent transparency, heat resistance, and impact resistance, has excellent post-processabilities such as lamination and printing, and is easily fabricated into packaging containers which are suitable for filling, packing, and storing various goods such as foods and beverages, medical supplies, chemicals such as detergents, shampoos, oils, toothpastes, adhesives, and agglutinants, and cosmetics. In the fabrication of packaging containers, for example, in the case of flexible packaging containers, one sheet of the gas barrier coating film laminate is folded or two sheets of the gas barrier coating film laminate are layered, with the heat seal resin layer being face to face, and the circumference of the folded or layered sheets is heat sealed. According to the method of packaging, the laminate is folded, with the inner layer being face to face, or two sheets of the laminate are layered, and the circumference is heat sealed by various heat sealing methods such as side sealing, two-way sealing, three-way sealing, four-way sealing, envelope-type sealing, pillow sealing, diaphragm sealing, flat bottom sealing, and cornered bottom sealing. Various packaging containers can be manufactured in this manner. The laminate can also be fabricated into stand-up pouches, tube containers, and the like. As the method of heat sealing, known methods such as bar sealing, roll sealing, belt sealing, impulse sealing, high frequency sealing, and supersonic wave sealing can be used. The packaging containers include a one-piece type, two-piece type, and other types such as those provided with an injection port, an open-close zipper, and the like.

When manufacturing packaging containers including paperboards, a laminate including the paperboards is first fabricated. Then, blank plates for fabricating desired paper containers are manufactured from the laminate of paperboards. Brick-type, flat-type, gable top-type, and other types of paper containers for liquid can be fabricated by forming trunks, bottoms, and heads from the blank plates.

The packaging containers with any shapes such as square containers and cylindrical paper cans can be manufactured. The containers manufactured in this manner can be used for filling and packing various goods such as various foods and beverages, chemicals such as adhesives and agglutinants, cosmetics, medical supplies, and miscellaneous goods.

Since the gas barrier coating film of the present invention obtained in the manner described above exhibits superior gas barrier properties under highly humid conditions, the gas barrier coating film is useful not only as a packaging material for foods, cigarettes, and toiletries, but is also used in the manufacture of solar batteries, protective overcoat, and moisture-proof films.

The present invention will be described in more detail by way of examples, which should not be construed as limiting the present invention.

### EXAMPLES

In the examples and comparative examples below "parts" and "%" indicate "parts by weight" and "% by weight", respectively, unless otherwise specified.

Properties of materials in the examples were evaluated according to the following methods.

### Coating film appearance

The coating film appearance was evaluated by vidual observation.

### Viscosity of coating solution (composition)

The viscosity was measured at 25°C using a B-type viscometer immediately after the preparation of the coating composition and at about 24 hours thereafter.

### Oxygen permeability

The oxygen permeability was measured using MOCON OXTRAN 2/20 manufactured by Modern Controls Inc.

### Water vapor permeability

The water vapor permeability was measured using MOCON PERMATRAN-W3/31MG manufactured by Modern Controls Inc.

### Water resistance of adhesion

Coating films were dipped in water at 50°C for 30 minutes and investigated whether the coating layer is peeled using a tape peeling test. Samples that peeled in 24 hours were evaluated as Bad, peeled between 24 and 48 hours were evaluated as Fair, and did not peel in 48 hours were evaluated as Good.

### Reference Example 1 (preparation of titanium chelate compound)

A reaction vessel equipped with a reflux condenser and a stirrer was charged with 100 parts of tetra-i-propoxytitanium and 70 parts of acetylacetone. A titanium chelate compound (b-1) was obtained by stirring the mixture at 60°C for 30 minutes . The purity of the reaction product was 75%.

### Reference Example 2 (preparation of titanium chelate compound)

A reaction vessel equipped with a reflux condenser and a stirrer was charged with 100 parts of tetra-n-butoxyzirconium (purity: 100%) and 68 parts of ethyl acetoacetate. A zirconium chelate compound (b-2) was obtained by stirring the mixture at 60°C for 30 minutes. The purity of the reaction product was 77%.

### Example 1

100 parts of 4% solution (in a 40:60 mixture of water and n-propyl alcohol) of an ethylene-vinyl alcohol copolymer ("Soarnol D2908", manufactured by The Nippon Synthetic Chemical Industry Co., Ltd., saponification degree: 98% or more, ethylene content: 29 mol%, melt flow rate: 8 g/10 minutes) was used as the component (a). The component (b) was prepared by hydrolyzing 2 parts of the titanium chelate compound (b-1) obtained in Reference Example 1 with 20 parts of n-propyl alcohol and 6 parts of water while stirring at room temperature for 30 minutes. The components (a) and (b) were mixed at room temperature. Then, the component (c), obtained by mixing 40 g of tetraethoxysilane, 60 parts of n-propyl alcohol, and 40 parts of water, was added to the mixture to obtain the coating composition (A) of the present invention.

### Example 2

100 parts of a 4% solution of an ethylene-vinyl alcohol copolymer ("Soarnol D2908", manufactured by The Nippon Synthetic Chemical Industry Co., Ltd., saponification degree: 98% or more, ethylene content: 29 mol%, melt flow rate: 8 g/10 minutes) in a mixed solvent of water and n-propyl alcohol (40:60 by weight), as a component (a), was mixed with a component (c), prepared by hydrolyzing 14 parts of tetraethoxysilane with 34 parts of 0.1N aqueous solution of hydrochloric acid and 52 parts of n- propyl alcohol, at room temperature to obtain the coating composition (B) of the present invention.

### Example 3

4 parts of an ethylene-vinyl alcohol copolymer ("Soarnol D2908", manufactured by The Nippon Synthetic Chemical Industry Co., Ltd., saponification degree: 98% or more, ethylene content: 29 mol%, melt flow rate: 8 g/10 minutes) as a component (a), and 0.2 part of tetraethoxysilane, as a component (c) , were added to 100 parts of a mixed solvent of water and n-propyl alcohol (40:60 by weight) . The mixture was stirred at 80°C for 3 hours and then allowed to cool to room temperature. Then, the resulting mixture was mixed with a component (b), which had been prepared by hydrolyzing 2 parts of the titanium chelate compound (b-1) obtained in Reference Example 1 with 20 parts of n-propyl alcohol and 6 parts of water while stirring at room temperature for 30 minutes, at room temperature to obtain the coating composition (C) of the present invention.

### Example 4

0.2 part of 100 N-β-(aminoethyl) γ-aminopropyltrimethoxysilane was added to 100 parts of the coating composition (A) obtained in Example 1 to prepare a coating composition (D) . The heating gel ratio of the coating composition (D) was 55%.

### Example 5

The gas barrier coating composition (E) of the present invention was obtained in the same manner as in Example 1, except that (b-2) was used instead of (b-1).

### Reference Example 6 (not according to the invention)

The gas barrier coating composition (F) of the present invention was obtained in the same manner as in Example 2, except for using polyvinyl alcohol [RS Polymer RS-110 (saponification degree: 99%, polymerization degree: 1,000, manufactured by Kuraray Co., Ltd.) as the component (a).

### Comparative Example 1

2 parts of titanium chelate compound (b-1) prepared in Reference Example 1 was added to 100 parts of a 4% solution (in a 40:60 mixture of water and n-propyl alcohol) of an ethylene-vinyl alcohol copolymer. The mixture used as the comparative coating composition (α).

### Example 7

100 parts of a 4% solution of an ethylene-vinyl alcohol copolymer ("Soarnol D2908", manufactured by The Nippon Synthetic Chemical Industry Co., Ltd., saponification degree: 98% or more, ethylene content: 29 mol%, melt flow rate: 8 g/10 minutes) in a mixed solvent of water and n-propyl alcohol (40:60 by weight), as a component (a), was mixed with a component (c), prepared by hydrolyzing 55 parts of tetraethoxysilane with 134 parts of 0.1N aqueous solution of hydrochloric acid and 204 parts of n-propyl alcohol, at room temperature. Then, the resulting mixture was mixed with a component (b) , which had been prepared by hydrolyzing 1 part of the titanium chelate compound (b-1) obtained in Reference Example 1 with 3 parts of n-propyl alcohol and 2 parts of water while stirring at 55°C for 4 hours, at room temperature to obtain the coating composition (G) of the present invention.

### Example 8

100 parts of a 4% solution of an ethylene-vinyl alcohol copolymer ("Soarnol D2908", manufactured by The Nippon Synthetic Chemical Industry Co., Ltd., saponification degree: 98% or more, ethylene content: 29 mol%, melt flow rate: 8 g/10 minutes) in a mixed solvent of water and n-propyl alcohol (40:60 by weight), as a component (a), was mixed with a component (c), prepared by hydrolyzing 14 parts of tetraethoxysilane with 34 parts of 0.1N aqueous solution of hydrochloric acid and 52 parts of n-propyl alcohol, at room temperature. Then, the resulting mixture was mixed with a component (b), which had been prepared by hydrolyzing 1 part of the titanium chelate compound (b-1) obtained in Reference Example 1 with 3 parts of n-propyl alcohol and 2 parts of water while stirring at 55°C for 4 hours, at room temperature. Then, a mixture of 20 parts of 8% colloidal silica dispersed in n-propyl alcohol and 20 parts of water was added to obtain a coating composition (H) of the present invention.

### Evaluation Examples 1-8, Comparative Evaluation Example 1

Each composition obtained in Examples 1-6 and Comparative Example 1 was applied to a PET film with a thickness of 25 µm, previously treated with corona discharge, using a bar coater and dried for one minute at 120°C using a hot air dryer to obtain a gas barrier coating film of the present invention with a thickness of 1 µm. Gas barrier properties of the coating film were measured at room temperature and 70% RH. Transparency of the coating film was evaluated by visual observation. In addition, the water resistance of adhesiveness was evaluated. Results are shown in Table 1.

**Table 1**

| | Evaluation Example | | | | | | | | Comparative Evaluation Example 1 |
|---|---|---|---|---|---|---|---|---|---|
| | 1 | 2 | 3 | 4 | 5 | 6 | 7 | 8 | |
| Composition | A | B | C | D | E | F | G | H | α |
| Coating film appearance | Good | Good | Good | Good | Good | Good | Good | Good | Good |
| Coating solution viscosity change over time (* 1) | | | | | | | | | |
| Immediately after preparation | 50 | 60 | 20 | 50 | 25 | 25 | 5 | 8 | 30 |
| After 24 hours | 55 | 60 | 20 | 50 | 30 | 25 | 5 | 8 | 200 |
| Water resistance of adhesiveness | Fair | Good | Good | Fair | Fair | Fair | Good | Good | BAD |
| Oxygen permeability (* 2) | 1.2 | 1.1 | 1.2 | 1.4 | 1.3 | 1.5 | 1.3 | 1.2 | 20 |

| | | | | | | | | | |
|---|---|---|---|---|---|---|---|---|---|
| * 1) Unit of viscosity: mPa·s *2) Unit of oxygen permeability: cc/m²·atm·24hr Measured at 23°C, 70% RH. | | | | | | | | | |

### Example 9

(1) A biaxially stretched PET film with a thickness of 12 µm was installed in a reel-out roller in a plasma CVD apparatus to form a vapor deposition layer of silicon oxide with a thickness of 0.012 µm on one of the surfaces.

### (Vapor deposition conditions)

Reaction gas mixing ratio (unit: slm): hexamethyldisiloxane:oxygen gas:helium=1:10:10 Vacuum degree in vacuum chamber: 5.5 x 10⁻⁶ mbar Vacuum degree in vapor deposition chamber: 6.5 x 10⁻² mbar Power supply to cooler-electrode drum: 18 kW
Film carriage speed: 80 m/minute
Vapor deposition surface: surface treated with corona discharge

(2) The surface of the silicon oxide vapor deposition layer formed on the biaxially stretched PET film was treated with corona discharge under the following conditions.

As a result, the surface tension of the silicon oxide vapor deposition layer was found to have increased from 35 dyn to 62 dyn.
Output: 10 kW
Treating speed: 100 m/min

(3) Next, the gas barrier coating composition (A) prepared in Example 1 was coated on the corona treated surface of the silicon oxide vapor deposition layer to a thickness of 0.5 g/m² (dry state) as a first color layer using a roller for gravure coating of a gravure machine. The coating was cured with heating at 120°C for 2 minutes to obtain the gas barrier coating film of the present invention. Using the same gravure machine, a desired multi-color printing image pattern layer was produced on the cured coating of the gas barrier coating film using a gravure ink composition.

(4) The biaxially stretched PET film on which the printing image pattern layer was produced was installed on the first reel-out roller of a dry laminating machine. A layer of an adhesive for lamination was formed on the printing image pattern layer by applying a two-liquid type polyurethane adhesive for lamination in the amount of 4.5 g/m² (dry state) by a gravure roll coating method. A low-density polyethylene film with a thickness of 70 µm was laminated on the adhesive layer by dry lamination, thereby obtaining a laminated product. The oxygen permeability of the laminated product at 23°C and 90% RH was 0.2 cm³/m²·atm·24 hours and the water vapor permeability at 38°C and 100% RH was 0.3 g/m²·atm·24 hours. The water resistance of adhesiveness was "Fair".

### Example 10

(1) A biaxially stretched PP film with a thickness of 20 µm ("GHI", one side corona discharged, manufactured by Futamura Chemical Industries Co., Ltd.) was installed in a reel-out roller in a plasma CVD apparatus to form a vapor deposition layer of silicon oxide with a thickness of 0.015 µm on one of the surfaces.

### (Vapor deposition conditions)

Reaction gas mixing ratio (unit: slm) : hexamethyldisiloxane:oxygen gas:helium = 1:11:10
Vacuum degree in vacuum chamber: 5.2 x 10⁻⁶ mbar
Vacuum degree in vapor deposition chamber: 5.1 x 10⁻² mbar
Power supply to cooler-electrode drum: 18 kW
Film forwarding speed: 70 m/minute
Vapor deposition surface: surface treated with corona discharge

(2) The surface of the silicon oxide vapor deposition layer formed on the biaxially stretched PP film was treated with corona discharge under the following conditions. As a result, the surface tension of the silicon oxide vapor deposition layer was found to have increased from 42 dyn to 65 dyn.
Output: 10 kW
Treating speed: 100 m/min

(3) Next, the gas barrier coating composition (B) prepared in Example 2 was coated on the corona treated surface of the silicon oxide vapor deposition layer to a thickness of 0.9 g/m² (dry state) as a first color layer using a roller for gravure coating of a gravure machine. The coating was cured with heating at 100°C for 3 minutesto obtain the gas barrier coating film of the present invention.

Using the same gravure machine, a desired multi-color printing pattern layer was produced on the cured coating of the gas barrier coating film using a gravure ink composition.

(4) The biaxially stretched PP film on which the printing image pattern layer was produced was installed on the first reel-out roller of a dry laminating machine. A layer of an adhesive for lamination was formed on the printing image pattern layer by applying a two-liquid type polyurethane adhesive for lamination in the amount of 4.5 g/m² (dry state) by a gravure roll coating method. A non-stretched polypropylene film with a thickness of 70 µm was laminated on the adhesive layer by dry lamination, thereby obtaining a laminated product. The oxygen permeability of the laminated product at 23°C and 90% RH was 0.6 cm³/m²·atm·24 hours and the water vapor permeability at 38°C and 100% RH was 0.4 g/m²·atm·24 hours. The water resistance of adhesiveness was "Good".

### Example 11

(1) A biaxially stretched nylon film with a thickness of 15 µm was installed in a reel-out roller in a plasma CVD apparatus to form a vapor deposition layer of silicon oxide with a thickness of 0.015 µm on one of the surfaces.

### (Vapor deposition conditions)

Reaction gas mixing ratio (unit: slm): hexamethyldisiloxane:oxygen gas:helium = 1:11:10 Vacuum degree in vacuum chamber: 5.2 x 10⁻⁶ mbar Vacuum degree in vapor deposition chamber: 5.1 x 10⁻² mbar Power supply to cooler-electrode drum: 18 kW
Film forwarding speed: 70 m/minute
Vapor deposition surface: surface treated with corona discharge

(2) The surface of the silicon oxide vapor deposition layer formed on the biaxially stretched nylon film was treated with corona discharge under the following conditions. As a result, the surface tension of the silicon oxide vapor deposition layer was found to have increased from 42 dyn to 65 dyn.
Output: 10 kW
Treating speed: 100 m/min

(3) Next, the gas barrier coating composition (C) prepared in Example 3 was coated on the corona treated surface of the silicon oxide vapor deposition layer to a thickness of 0.5 g/m² (dry state) as a first color layer using a roller for gravure coating of a gravure machine. The coating was cured with heating at 120°C for 1 minuteto obtain the gas barrier coating film of the present invention. Using the same gravure machine, a desired multi-color printing pattern layer was produced on the cured coating of the gas barrier coating film using a gravure ink composition.

(4) The biaxially stretched nylon film on which the printing image pattern layer was produced was installed on the first reel-out roller of a dry laminating machine. A layer of an adhesive for lamination was formed on the printing image pattern layer by applying a two-liquid type polyurethane adhesive for lamination in the amount of 4.5 g/m² (dry state) by a gravure roll coating method.

A non-stretched polypropylene film with a thickness of 70 µm was laminated on the adhesive layer by dry lamination, thereby obtaining a laminated product. The oxygen permeability of the laminated product at 23°C and 90% RH was 0.5 cm³/m²·atm·24 hours and the water vapor permeability at 38°C and 100% RH was 0.5 g/m²·atm·24 hours. The water resistance of adhesiveness was "Good".

### Example 12

The biaxially stretched PET film on which the printing image pattern layer was formed in Example 9(4) was installed on the first reel-out roller of an extrusion-lamination machine. A laminate product was produced in the same manner as in Example 7, excepting that instead of forming a laminate of the low-density polyethylene film with a thickness of 70 µm on the printing image pattern layer via the adhesive layer as in Example 7(4), a low-density polyethylene film for melt extrusion was extruded at a thickness of 20 µm to form an extrusion laminate of the low-density polyethylene film with a thickness of 70 µm. The oxygen permeability of the laminated product at 23°C and 90% RH was 0.3 cm³/m²·atm·24 hours and the water vapor permeability at 38°C and 100% RH was 0.5 g/m²·atm·24 hours. The water resistance of adhesiveness was "Fair".

### Example 13

The biaxially stretched PP film on which the printing image pattern layer was formed in Example 10(4) was installed on the first reel-out roller of an extrusion-lamination machine. A laminate product was produced in the same manner as in Example 8, excepting that instead of forming a laminate of the non-stretching polypropylene film with a thickness of 70 µm on the printing image pattern layer via the adhesive layer as in Example 8(4), a low-density polyethylene film for melt extrusion was extruded at a thickness of 20 µm to form an extrusion laminate of the low-density polyethylene film with a thickness of 70 µm. The oxygen permeability of the laminated product at 23°C and 90% RH was 0.8 cm³/m²·atm·24 hours and the water vapor permeability at 38°C and 100% RH was 0.7 g/m²·atm·24 hours. The water resistance of adhesiveness was "Good".

### Example 14

The biaxially stretched nylon film on which the printing image pattern layer was formed in Example 11(4) was installed on the first reel-out roller of an extrusion-lamination machine. A laminate product was produced in the same manner as in Example 9, excepting that instead of forming a laminate of the non-stretching polypropylene film with a thickness of 70 µm on the printing image pattern layer via the adhesive layer as in Example 9(4), a low-density polyethylene film for melt extrusion was extruded at a thickness of 20 µm to form an extrusion laminate of the low-density polyethylene film with a thickness of 70 µm. The oxygen permeability of the laminated product at 23°C and 90% RH was 0.6 cm³/m²·atm·24 hours and the water vapor permeability at 38°C and 100% RH was 0. 6 g/m²·atm·24 hours. The water resistance of adhesiveness was "Good".

### Example 15

(1) A biaxially stretched PET film with a thickness of 12 µm was installed in a reel-out roller of a roll-type vacuum vapor deposition apparatus. A vapor deposition layer of aluminum oxide with a thickness of 0.02 µm was formed on this biaxially stretched PET film using aluminum as a vapor deposition source by the oxidation vapor deposition method of electron beam (EB) heating type by reeling out the film onto a coating drum while supplying oxygen gas.

### (Vapor deposition conditions)

Vapor deposition source: aluminum
Vacuum degree in vacuum chamber: 5.2 x 10⁻⁶ mbar
Vacuum degree in vapor deposition chamber: 1.1 x 10⁻⁶ mbar
EB output: 40 kW
Film forwarding speed: 600 m/minute
Vapor deposition surface: surface treated with corona discharge

(2) The surface of the aluminum oxide vapor deposition layer formed on the biaxially stretched PET film was treated with corona discharge under the following conditions. As a result, the surface tension of the aluminum oxide vapor deposition layer was found to have increased from 45 dyn to 60 dyn.
Output: 10 kW
Treating speed: 100 m/min

(3) Next, the gas barrier coating composition (D) prepared in Example 4 was coated on the corona treated surface of the aluminum oxide vapor deposition layer to a thickness of 0.9 g/m² (dry state) as a first color layer using a roller for gravure coating of a gravure machine. The coating was cured with heating at 120°C for 1 minute to obtain the gas barrier coating film of the present invention. Using the same gravure machine, a desired multi-color printing pattern layer was produced on the cured coating of the gas barrier coating film using a gravure ink composition.

(4) The biaxially stretched PET film on which the printing image pattern layer was produced was installed on the first reel-out roller of a dry laminating machine. A layer of an adhesive for lamination was formed on the printing image pattern layer by applying a two-liquid type polyurethane adhesive for lamination in the amount of 4.5 g/m² (dry state) by a gravure roll coating method. A low-density polyethylene film with a thickness of 70 µm was laminated on the adhesive layer by dry lamination, thereby obtaining a laminated product. The oxygen permeability of the laminated product at 23°C and 90% RH was 0.2 cm³/m²·atm·24 hours and the water vapor permeability at 38°C and 100% RH was 0.3 g/m²·atm·24 hours. The water resistance of adhesiveness was "Fair".

### Example 16

(1) A biaxially stretched PP film with a thickness of 20 µm ("GH-I", one side corona discharged, manufactured by Futamura Chemical Industries Co., Ltd.) was installed in a reel-out roller of a roll-type vacuum vapor deposition apparatus. A vapor deposition layer of aluminum oxide with a thickness of 0.02 µm was formed on this biaxially stretched PP film using aluminum as a vapor deposition source by the oxidation vapor deposition method of electron beam (EB) heating type by reeling out the film onto a coating drum while supplying oxygen gas.

### (Vapor deposition conditions)

Vapor deposition source: aluminum
Vacuum degree in vacuum chamber: 8.2 x 10⁻⁶ mbar
Vacuum degree in vapor deposition chamber: 1.0 x 10⁻⁶ mbar
EB output: 40 kW
Film forwarding speed: 500 m/minute

(2) The surface of the aluminum oxide vapor deposition layer formed on the biaxially stretched PP film was treated with corona discharge under the following conditions.

As a result, the surface tension of the aluminum oxide vapor deposition layer was found to have increased from 47 dyn to 62 dyn.
Output: 10 kW
Treating speed: 100 m/min

(3) Next, the gas barrier coating composition (E) prepared in Example 5 was coated on the corona treated surface of the aluminum oxide vapor deposition layer to a thickness of 0.5 g/m² (dry state) as a first color layer using a roller for gravure coating of a gravure machine. The coating was cured with heating at 100°C for 3 minutes to obtain the gas barrier coating film of the present invention. Using the same gravure machine, a desired multi-color printing pattern layer was produced on the cured coating of the gas barrier coating film using a gravure ink composition.

(4) The biaxially stretched PP film on which the printing image pattern layer was produced was installed on the first reel-out roller of a dry laminating machine. A layer of an adhesive for lamination was formed on the printing image pattern layer by applying a two-liquid type polyurethane adhesive for lamination in the amount of 4.5 g/m² (dry state) by a gravure roll coating method. A non-stretched polypropylene film with a thickness of 70 µm was laminated on the adhesive layer by dry lamination, thereby obtaining a laminated product. The oxygen permeability of the laminated product at 23°C and 90% RH was 0.6 cm³/m²·atm·24 hours and the water vapor permeability at 38°C and 100% RH was 0.6 g/m²·atm·24 hours. The water resistance of adhesiveness was "Fair".

### Example 17 (not according to the invention)

(1) A biaxially stretched nylon film with a thickness of 15 µm was installed in a reel-out roller of a roll-type vapor deposition apparatus. A vapor deposition layer of aluminum oxide with a thickness of 0.02 µm was formed on this biaxially stretched nylon film using aluminum as a vapor deposition source by the oxidation vapor deposition method of electron beam (EB) heating type by reeling out the film onto a coating drum while supplying oxygen gas.

### (Vapor deposition conditions)

Vapor deposition source: aluminum
Vacuum degree in vacuum chamber: 7.2 x 10⁻⁶ mbar
Vacuum degree in vapor deposition chamber: 1.0 x 10⁻⁶ mbar
EB output: 40 kW
Film forwarding speed: 500 m/minute
Vapor deposition surface: surface treated with corona discharge

(2) The surface of the aluminum oxide vapor deposition layer formed on the biaxially stretched nylon film was treated with corona discharge under the following conditions. As a result, the surface tension of the aluminum oxide vapor deposition layer was found to have increased from 45 dyn to 60 dyn.
Output: 10 kW
Treating speed: 100 m/min

(3) Next, the gas barrier coating composition (F) prepared in Reference Example 6 was coated on the corona treated surface of the aluminum oxide vapor deposition layer to a thickness of 0.5 g/m² (dry state) as a first color layer using a roller for gravure coating of a gravure machine. The coating was cured with heating at 120°C for 2 minutes to obtain the gas barrier coating film of the present invention. Using the same gravure machine, a desired multi-color printing pattern layer was produced on the cured coating of the gas barrier coating film using a gravure ink composition.

(4) The biaxially stretched nylon film on which the printing image pattern layer was produced was installed on the first reel-out roller of a dry laminating machine. A layer of an adhesive for lamination was formed on the printing image pattern layer by applying a two-liquid type polyurethane adhesive for lamination in the amount of 4.5 g/m² (dry state) by a gravure roll coating method.

A non-stretched polypropylene film with a thickness of 70 µm was laminated on the adhesive layer by dry lamination, thereby obtaining a laminated product. The oxygen permeability of the laminated product at 23°C and 90% RH was 0.5 cm³/m²·atm·24 hours and the water vapor permeability at 38°C and 100% RH was 0.6 g/m²·atm·24 hours. The water resistance of adhesiveness was "Fair".

### Example 18

The biaxially stretched PET film on which the printing image pattern layer was formed in Example 15(4) was installed on the first reel-out roller of an extrusion-lamination machine. A laminate product was produced in the same manner as in Example 13, excepting that instead of forming a laminate of the low-density polyethylene film with a thickness of 70 µm on the printing image pattern layer via the adhesive layer as in Example 13(4), a low-density polyethylene film for melt extrusion was extruded at a thickness of 20 µm to form an extrusion laminate of the low-density polyethylene film with a thickness of 70 µm. The oxygen permeability of the laminated product at 23°C and 90% RH was 0.3 cm³/m²·atm·24 hours and the water vapor permeability at 38°C and 100% RH was 0.4 g/m²·atm·24 hours. The water resistance of adhesiveness was "Fair".

### Example 19

The biaxially stretched PP film on which the printing image pattern layer was formed in Example 16(4) was installed on the first reel-out roller of an extrusion-lamination machine. A laminate product was produced in the same manner as in Example 14, excepting that instead of forming a laminate of the non-stretching polypropylene film with a thickness of 70 µm on the printing image pattern layer via the adhesive layer as in Example 14(4), a low-density polyethylene film for melt extrusion was extruded at a thickness of 20 µm to form an extrusion laminate of the low-density polyethylene film with a thickness of 70 µm. The oxygen permeability of the laminated product at 23°C and 90% RH was 0.8 cm³/m²·atm·24 hours and the water vapor permeability at 38°C and 100% RH was 0.7 g/m²·atm·24 hours. The water resistance of adhesiveness was "Fair".

### Example 20

The biaxially stretched nylon film on which the printing image pattern layer was formed in Example 17(4) was installed on the first reel-out roller of an extrusion-lamination machine. A laminate product was produced in the same manner as in Example 15, excepting that instead of forming a laminate of the non-stretching polypropylene film with a thickness of 70 µm on the printing image pattern layer via the adhesive layer as in Example 15(4), a low-density polyethylene film for melt extrusion was extruded at a thickness of 20 µm to form an extrusion laminate of the low-density polyethylene film with a thickness of 70 µm. The oxygen permeability of the laminated product at 23°C and 90% RH was 0.6 cm³/m²·atm·24 hours and the water vapor permeability at 38°C and 100% RH was 0.7 g/m²·atm·24 hours. The water resistance of adhesiveness was "Fair".

### Example 21

(1) A biaxially stretched PET film with a thickness of 12 µm was installed in a reel-out roller in a plasma CVD apparatus to form a vapor deposition layer of silicon oxide with a thickness of 0.012 µm on one of the surfaces.

### (Vapor deposition conditions)

Reaction gas mixing ratio (unit: slm):
hexamethyldisiloxane:oxygen gas:helium = 1:10:10
Vacuum degree in vacuum chamber: 5.5 x 10⁻⁶ mbar
Vacuum degree in vapor deposition chamber: 6.5 x 10⁻² mbar
Power supply to cooler-electrode drum: 18 kW
Film forwarding speed: 80 m/minute
Vapor deposition surface: surface treated with corona discharge

(2) The above biaxially stretched PET film on which the silicon oxide vapor deposition layer was formed was installed in a reel-out roller of a roll-type vapor deposition apparatus. A vapor deposition layer of aluminum oxide with a thickness of 0.02 µm was formed on this silicon oxide vapor deposition layer using aluminum as a vapor deposition source by the reaction vacuum vapor deposition method of electron beam (EB) heating type by reeling out the film onto a coating drum while supplying oxygen gas. The produced aluminum oxide vapor deposition layer was treated with corona discharge under the following conditions. As a result, the surface tension of the aluminum oxide vapor deposition layer was found to have increased from 40 dyn to 65 dyn.
Output: 10 kW
Treating speed: 100 m/min

(3) Next, the gas barrier coating composition (G) prepared in Example 7 was coated on the corona treated surface of the aluminum oxide vapor deposition layer to a thickness of 1.0 g/m² (dry state) as a first color layer using a roller for gravure coating of a gravure machine. The coating was cured with heating at 120°C for 1 minute to obtain the gas barrier coating film of the present invention. Using the same gravure machine, a desired multi-color printing pattern layer was produced on the cured coating of the gas barrier coating film using a gravure ink composition.

(4) The biaxially stretched PET film on which the printing image pattern layer was produced was installed on the first reel-out roller of a dry laminating machine. A layer of an adhesive for lamination was formed on the printing image pattern layer by applying a two-liquid type polyurethane adhesive for lamination in the amount of 4.5 g/m² (dry state) by a gravure roll coating method. A low-density polyethylene film with a thickness of 70 µm was laminated on the adhesive layer by dry lamination, thereby obtaining a laminated product. The oxygen permeability at 23°C and 90% RH of the laminated product was 0.2 cm³/m²·atm·24 hours and the water vapor permeability at 38°C and 100% RH was 0.3 g/m²·atm·24 hours. The water resistance of adhesiveness was "Good".

### Example 22

(1) A biaxially stretched PP film with a thickness of 20 µm ("GHI", one side corona discharged, manufactured by Futamura Chemical Industries Co., Ltd.) was installed in a reel-out roller in a plasma CVD apparatus to form a vapor deposition layer of silicon oxide with a thickness of 0.015 µm on one of the surfaces.

### (Vapor deposition conditions)

Reaction gas mixing ratio (unit: slm):
hexamethyldisiloxane:oxygen gas:helium = 1:11:10
Vacuum degree in vacuum chamber: 5.2 x 10⁻⁶ mbar
Vacuum degree in vapor deposition chamber: 5.1 x 10⁻² mbar
Power supply to cooler-electrode drum: 18 kW
Film forwarding speed: 70 m/minute
Vapor deposition surface: surface treated with corona discharge

(2) The above biaxially stretched PP film with on which the silicon oxide vapor deposition layer was formed as mentioned above was installed in a reel-out roller of a roll-type vapor deposition apparatus. A vapor deposition layer of aluminum oxide with a thickness of 0.02 µm was formed on this silicon oxide vapor deposition layer using aluminum as a vapor deposition source by the reaction vacuum vapor deposition method of electron beam (EB) heating type by reeling out the film onto a coating drum while supplying oxygen gas. The produced aluminum oxide vapor deposition layer was treated with corona discharge under the following conditions. As a result, the surface tension of the aluminum oxide vapor deposition layer was found to have increased from 42 dyn to 65 dyn.
Output: 10 kW
Treating speed: 100 m/min

(3) Next, the gas barrier coating composition (H) prepared in Example 8 was coated on the corona treated surface of the aluminum oxide vapor deposition layer to a thickness of 0.8 g/m² (dry state) as a first color layer using a roller for gravure coating of a gravure machine. The coating was cured with heating at 120°C for 1 minute to obtain the gas barrier coating film of the present invention. Using the same gravure machine, a desired multi-color printing pattern layer was produced on the cured coating of the gas barrier coating film using a gravure ink composition.

(4) The biaxially stretched PP film on which the printing image pattern layer was produced was installed on the first reel-out roller of a dry laminating machine. A layer of an adhesive for lamination was formed on the printing image pattern layer by applying a two-liquid type polyurethane adhesive for lamination in the amount of 4.5 g/m² (dry state) by a gravure roll coating method. A non-stretched polypropylene film with a thickness of 70 µm was laminated on the adhesive layer by dry lamination, thereby obtaining a laminated product. The oxygen permeability of the laminated product at 23°C and 90% RH was 0.5 cm³/m²·atm·24 hours and the water vapor permeability at 38°C and 100% RH was 0.5 g/m²·atm·24 hours. The water resistance of adhesiveness was "Good".

### Example 23

(1) A biaxially stretched nylon film with a thickness of 15 µm was installed in a reel-out roller in a plasma CVD apparatus to form a vapor deposition layer of silicon oxide with a thickness of 0.015 µm on one of the surfaces.

### (Vapor deposition conditions)

Reaction gas mixing ratio (unit: slm):
hexamethyldisiloxane:oxygen gas:helium = 1:11:10
Vacuum degree in vacuum chamber: 5.2 x 10⁻⁶ mbar
Vacuum degree in vapor deposition chamber: 5.1 x 10⁻² mbar
Power supply to cooler-electrode drum: 18 kW
Film forwarding speed: 70 m/minute
Vapor deposition surface: surface treated with corona discharge

(2) The above biaxially stretched nylon film with on which the silicon oxide vapor deposition layer was formed as mentioned above was installed in a reel-out roller of a roll-type vapor deposition apparatus. A vapor deposition layer of aluminum oxide with a thickness of 0.02 µm was formed on this silicon oxide vapor deposition layer using aluminum as a vapor deposition source by the reaction vacuum vapor deposition method of electron beam (EB) heating type by reeling out the film onto a coating drum while supplying oxygen gas. The produced aluminum oxide vapor deposition layer was treated with corona discharge under the following conditions. As a result, the surface tension of the aluminum oxide vapor deposition layer was found to have increased from 45 dyn to 65 dyn.
Output: 10 kW
Treating speed: 100 m/min

(3) Next, the gas barrier coating composition (B) prepared in Example 2 was coated on the corona treated surface of the aluminum oxide vapor deposition layer to a thickness of 1.2 g/m² (dry state) as a first color layer using a roller for gravure coating of a gravure machine. The coating was dried at 120°C for 2 minutes to cure the coating to obtain the gas barrier coating film of the present invention.

Using the same gravure machine, a desired multi-color printing pattern layer was produced on the cured coating of the gas barrier coating film using a gravure ink composition.

(4) The biaxially stretched nylon film on which the printing image pattern layer was produced was installed on the first reel-out roller of a dry laminating machine. A layer of an adhesive for lamination was formed on the printing image pattern layer by applying a two-liquid type polyurethane adhesive for lamination in the amount of 4.5 g/m² (dry state) by a gravure roll coating method. A non-stretched polypropylene film with a thickness of 70 µm was laminated on the adhesive layer by dry lamination, thereby obtaining a laminated product. The oxygen permeability of the laminated product at 23°C and 90% RH was 0.4 cm³/m²·atm·24 hours and the water vapor permeability at 38°C and 100% RH was 0.3 g/m²·atm·24 hours. The water resistance of adhesiveness was "Good".

### Example 24

The biaxially stretched PET film on which the printing image pattern layer was formed in Example 21(4) was installed on the first reel-out roller of an extrusion-lamination machine. A laminate product was produced in the same manner as in Example 19, excepting that instead of forming a laminate of the low-density polyethylene film with a thickness of 70 µm on the printing image pattern layer via the adhesive layer as in Example 19(4), a low-density polyethylene film for melt extrusion was extruded at a thickness of 20 µm to form an extrusion laminate of the low-density polyethylene film with a thickness of 70 µm. The oxygen permeability of the laminated product at 23°C and 90% RH was 0.2 cm³/m²·atm·24 hours and the water vapor permeability at 38°C and 100% RH was 0.3 g/m²·atm·24 hours. The water resistance of adhesiveness was "Good".

### Example 25

The biaxially stretched PP film on which the printing image pattern layer was formed in Example 22(4) was installed on the first reel-out roller of an extrusion-lamination machine. A laminate product was produced in the same manner as in Example 20, excepting that instead of forming a laminate of the non-stretching polypropylene film with a thickness of 70 µm on the printing image pattern layer via the adhesive layer as in Example 20(4), a low-density polyethylene film for melt extrusion was extruded at a thickness of 20 µm to form an extrusion laminate of the low-density polyethylene film with a thickness of 70 µm. The oxygen permeability of the laminated product at 23°C and 90% RH was 0.6 cm³/m²·atm·24 hours and the water vapor permeability at 38°C and 100% RH was 0.7 g/m²·atm·24 hours. The water resistance of adhesiveness was "Good".

### Example 26

The biaxially stretched nylon film on which the printing image pattern layer was formed in Example 23(4) was installed on the first reel-out roller of an extrusion-lamination machine. A laminate product was produced in the same manner as in Example 21, excepting that instead of forming a laminate of the non-stretching polypropylene film with a thickness of 70 µm on the printing image pattern layer via the adhesive layer as in Example 21(4), a low-density polyethylene film for melt extrusion was extruded at a thickness of 20 µm to form an extrusion laminate of the low-density polyethylene film with a thickness of 70 µm. The oxygen permeability of the laminated product at 23°C and 90% RH was 0.5 cm³/m²·atm·24 hours and the water vapor permeability at 38°C and 100% RH was 0.6 g/m²·atm·24 hours. The water resistance of adhesiveness was "Good".

### Example 27

A laminate product was prepared in the same manner as in Example 23, provided that the gas barrier coating composition (C) was used in Example 23(3). The oxygen permeability of the laminated product at 23°C and 90% RH was 0.4 cm³/m²·atm·24 hours and the water vapor permeability at 38°C and 100% RH was 0.5 g/m²·atm·24 hours. The water resistance of adhesiveness was "Good".

A gas barrier coating composition producing a coating exhibiting very small oxygen permeability under high humidity conditions, exhibiting superior adhesion to substrates, and being non-toxic to humans is provided by the present invention. A coating material exhibiting superior gas barrier properties can be obtained by coating the gas barrier coating composition onto a synthetic resin film, with or without a vapor deposition layer of metal and/or inorganic compound formed thereon.

Obviously, numerous modifications and variations of the present invention are possible in light of the above teachings. It is therefore to be understood that, within the scope of the appended claims, the invention may be practiced otherwise than as specifically described herein.

A gas barrier coating composition comprising (a) a polyvinyl alcohol resin, (b) a metal alcoholate of the formula R¹ₘM(OR²)ₙ (wherein M Ti, Zr, or Al, R¹ is C₁₋₈ organic group, R² is C₁₋₅ alkyl, C₁₋₆ acyl, or phenyl, and m and n are 0 or more, with m + n representing the valence of M), a hydrolyzate, condensate, or chelate compound of the metal alcoholate, a hydrolyzate or condensate of the metal chelate compound, a metal acylate of the of the formula R¹ₘM(OR²)ₙ, a hydrolyzate or condensate of the metal acylate, and (c) an organosilane of the formula R³ₚSi(OR⁴)₄₋ₚ (wherein R³ is C₁₋₈ organic group, R⁴ is C₁₋₅ alkyl, C₁₋₆ acyl, or phenyl, and p is 0-2), a hydrolyzate or condensate of the organosilane. The composition can produce a coating exhibiting very small oxygen permeability under high humidity conditions, exhibiting superior adhesion to substrates, and being non-toxic to humans is provided by the present invention, and is useful as a packaging material for medical supplies, foods, cosmetics, cigarettes, and toiletries.

## Claims

1. A gas barrier coating composition comprising:
(a) a polyvinyl alcohol resin, which is a copolymer of ethylene and vinyl alcohol,
(b) at least one compound selected from the group consisting of a metal alcoholate of the following formula (1),
R¹ ₘM(OR²)ₙ (1)
wherein M indicates a metal atom selected from the group consisting of titanium, zirconium, and aluminum, R¹ individually represents an organic group having 1-8 carbon atoms, R² individually represents an alkyl group having 1-5 carbon atoms, an acyl group having 1-6 carbon atoms, or a phenyl group, and m and n are individually an integer of 0 or more, with m + n representing the valence of M, a hydrolyzate of the metal alcoholate, a condensate of the metal alcoholate, a chelate compound of the metal alcoholate, a hydrolyzate of the metal chelate compound, a condensate of the metal chelate compound, a metal acylate of the above formula (1), a hydrolyzate of the metal acylate, and a condensate of the metal acylate, and
(c) at least one compound selected from the group consisting of an organosilane of the following formula (2),
R³ ₚSi(OR⁴)₄₋ₚ (2)
wherein R³ individually represents an organic group having 1-8 carbon atoms, R⁴ individually represents an alkyl group having 1-5 carbon atoms, an acyl group having 1-6 carbon atoms, or a phenyl group, and p is an integer of 0-2, a hydrolyzate of the organosilane, and a condensate of the organosilane.

2. The gas barrier coating composition according to claim 1, wherein the copolymer of ethylene and vinyl alcohol contains 20-45 mol% of recurring units originating from ethylene.

3. The gas barrier coating composition according to claim 1, wherein the polyvinyl alcohol resin has a melt flow rate of 1-50 g/10 minutes measured at a temperature of 210 DEG C and a load of 21.168 N.

4. The gas barrier coating composition according to claim 1, containing 10 to 10,000 parts by weight of the polyvinyl alcohol resin for 100 parts by weight of the component (b).

5. The gas barrier coating composition according to claim 1, wherein the component (b) is a metal alcoholate, a hydrolyzate of the metal alcoholate, a condensate of the metal alcoholate, a chelate compound of the metal alcoholate, a hydrolyzate of the metal chelate compound, or a condensate of the metal chelate compound, and R¹ in the formula (1) is an organic group selected from the group consisting of an alkyl group having 1-8 carbon atoms, acyl group having 1-8 carbon atoms, vinyl group, allyl group, cyclohexyl group, phenyl group, glycidyl group, (meth) acryloxy group, ureido group, amide group, fluoroacetamide group, isocyanate group, and substitution derivatives of these groups.

6. The gas barrier coating composition according to claim 1, wherein the component (b) is a hydrolyzate hydrolyzed in water or a mixed solvent containing water and a hydrophilic organic solvent.

7. The gas barrier coating composition according to claim 1, containing 0.1 to 1,000 parts by weight of the component (c) for 100 parts by weight of the component (a).

8. The gas barrier coating composition according to claim 1, further comprising a nitrogen-containing compound.

9. The gas barrier coating composition according to claim 8, wherein the nitrogen-containing compound is selected from the group consisting of N,N-dimethylacetamide, N,N-dimethylformamide, γ-butyrolactone, N-methyl-2-pyrrolidone, pyridine, thymine, glycine, cytosine, guanine, polyvinylpyrrolidone, polyacrylamide, polymethacrylamide, and copolymers produced by copolymerizing these compounds as comonomers.

10. The gas barrier coating composition according to claim 1, further comprising fine inorganic particles.

11. The gas barrier coating composition according to claim 10, wherein the fine inorganic particles are particulate inorganic materials not substantially containing carbon atoms and having an average particle size of 0.2 µm or less.

12. The gas barrier coating composition according to claim 10, wherein the fine inorganic particles are selected from the group consisting of metal oxide particles, silicon oxide particles, metal nitride particles, silicon nitride particles, and metal boride particles.

13. The gas barrier coating composition of claim 1, wherein the component (c) is a compound having p=0 in the formula (2) and previously hydrolyzed in water or a mixed solvent containing water and a hydrophilic organic solvent.

14. A method of preparing a gas barrier coating composition comprising:
hydrolyzing (b) at least one compound selected from the group consisting of a metal alcoholate of the following formula (1),
R¹ ₘM(OR²)ₙ (1)
wherein M indicates a metal atom selected from the group consisting of titanium, zirconium, and aluminum, R¹ individually represents an organic group having 1-8 carbon atoms, R² individually represents an alkyl group having 1-5 carbon atoms, an acyl group having 1-6 carbon atoms, or a phenyl group, and m and n are individually an integer of 0 or more, with m + n representing the valence of M, a hydrolyzate of the metal alcoholate, a condensate of the metal alcoholate, a chelate compound of the metal alcoholate, a hydrolyzate of the metal chelate compound, a condensate of the metal chelate compound, a metal acylate of the above formula (1), a hydrolyzate of the metal acylate, and a condensate of the metal acylate, in water or a mixed solvent containing water and a hydrophilic organic solvent, and
mixing the resulting hydrolyzate with (a) a polyvinyl alcohol resin, which is a copolymer of ethylene and vinyl alcohol and (c) at least one compound selected from the group consisting of an organosilane of the following formula (2),
R³ ₚSi(OR⁴)₄₋ₚ (2)
wherein R³ individually represents an organic group having 1-8 carbon atoms, R⁴ individually represents an alkyl group having 1-5 carbon atoms, an acyl group having 1-6 carbon atoms, or a phenyl group, and p is an integer of 0-2, a hydrolyzate of the organosilane, and a condensate of the organosilane.

## Patentansprüche

1. Beschichtungszusammensetzung mit Gasbarrieren-Eigenschaften, die die nachstehenden Bestandteile umfasst:
(a) ein Polyvinylalkoholharz, das ein Copolymer aus Ethylen und Vinylalkohol ist,
(b) mindestens eine Verbindung, die aus der Gruppe ausgewählt ist, die aus einem Metallalkoholat mit der nachstehenden Formel (1):
R¹ ₘM(OR²)ₙ (1)
worin M für ein Metallatom steht, das aus der Gruppe ausgewählt ist, die aus Titan, Zirconium und Aluminium besteht, R¹ einzeln eine organische Gruppe mit 1 bis 8 Kohlenstoffatomen, R² einzeln eine Alkylgruppe mit 1 bis 5 Kohlenstoffatomen, eine Acylgruppe mit 1 bis 6 Kohlenstoffatomen oder eine Phenylgruppe wiedergibt, und m und n einzeln eine ganze Zahl von 0 oder größer sind, wobei m + n die Wertigkeit von M wiedergeben,
einem Hydrolysat des Metallalkoholats, einem Kondensat des Metallalkoholats, einer Chelatverbindung des Metallalkoholats, einem Hydrolysat der Metallchelatverbindung, einem Kondensat der Metallchelatverbindung, einem Metallacylat der vorstehenden Formel (1), einem Hydrolysat des Metallacylats und einem Kondensat des Metallacylats besteht, und
(c) mindestens eine Verbindung, die aus der Gruppe ausgewählt ist, die aus einem Organosilan mit der nachstehenden Formel (2):
R³ ₚSi(OR⁴)₄₋ₚ (2)
worin R³ einzeln eine organische Gruppe mit 1 bis 8 Kohlenstoffatomen, R⁴ einzeln eine Alkylgruppe mit 1 bis 5 Kohlenstoffatomen, eine Acylgruppe mit 1 bis 6 Kohlenstoffatomen oder eine Phenylgruppe wiedergibt, und p eine ganze Zahl von 0 bis 2 ist,
einem Hydrolysat des Organosilans und einem Kondensat des Organosilans besteht.

2. Beschichtungszusammensetzung mit Gasbarrieren-Eigenschaften nach Anspruch 1, wobei das Copolymer aus Ethylen und Vinylalkohol 20 bis 45 mol-% Wiederholungseinheiten enthält, die vom Ethylen stammen.

3. Beschichtungszusammensetzung mit Gasbarrieren-Eigenschaften nach Anspruch 1, wobei das Polyvinylalkoholharz eine bei einer Temperatur von 210 °C und einer Last von 21,168 N gemessene Geschwindigkeit des Schmelzflusses von 1 bis 50 g/10 Minuten aufweist.

4. Beschichtungszusammensetzung mit Gasbarrieren-Eigenschaften nach Anspruch 1, die 10 bis 10.000 Gewichtsteile Polyvinylalkoholharz pro 100 Gewichtsteile des Bestandteils (b) enthält.

5. Beschichtungszusammensetzung mit Gasbarrieren-Eigenschaften nach Anspruch 1, wobei der Bestandteil (b) ein Metallalkoholat, ein Hydrolysat des Metallalkoholats, ein Kondensat des Metallalkoholats, eine Chelatverbindung des Metallalkoholats, ein Hydrolysat der Metallchelatverbindung oder ein Kondensat der Metallchelatverbindung ist, und R¹ in Formel (1) eine organische Gruppe ist, die aus der Gruppe ausgewählt ist, die aus einer Alkylgruppe mit 1 bis 8 Kohlenstoffatomen, einer Acylgruppe mit 1 bis 8 Kohlenstoffatomen, einer Vinylgruppe, einer Allylgruppe, einer Cyclohexylgruppe, einer Phenylgruppe, einer Glycidylgruppe, einer (Meth)acryloxygruppe, einer Ureidogruppe, einer Amidgruppe, einer Fluoracetamidgruppe, einer Isocyanatgruppe und Substitutionsderivaten dieser Gruppen besteht.

6. Beschichtungszusammensetzung mit Gasbarrieren-Eigenschaften nach Anspruch 1, wobei der Bestandteil (b) ein Hydrolysat ist, das in Wasser oder einem Mischlösungsmittel, das Wasser und ein hydrophiles organisches Lösungsmittel enthält, hydrolysiert wurde.

7. Beschichtungszusammensetzung mit Gasbarrieren-Eigenschaften nach Anspruch 1, die 0,1 bis 1.000 Gewichtsteile des Bestandteils (c) pro 100 Gewichtsteile des Bestandteils (a) enthält.

8. Beschichtungszusammensetzung mit Gasbarrieren-Eigenschaften nach Anspruch 1, die des Weiteren eine stickstoffhaltige Verbindung umfasst.

9. Beschichtungszusammensetzung mit Gasbarrieren-Eigenschaften nach Anspruch 8, wobei die stickstoffhaltige Verbindung aus der Gruppe ausgewählt ist, die aus N,N-Dimethylacetamid, N,N-Dimethylformamid, γ-Butyrolacton, N-Methyl-2-pyrrolidon, Pyridin, Thymin, Glycin, Cytosin, Guanin, Polyvinylpyrrolidon, Polyacrylamid, Polymethacrylamid und Copolymeren, die durch die Copolymerisierung dieser Verbindungen als Comonomere hergestellt wurden, besteht.

10. Beschichtungszusammensetzung mit Gasbarrieren-Eigenschaften nach Anspruch 1, die des Weiteren feine anorganische Teilchen umfasst.

11. Beschichtungszusammensetzung mit Gasbarrieren-Eigenschaften nach Anspruch 10, wobei es sich bei den feinen anorganischen Teilchen um partikuläre anorganische Materialien handelt, die im wesentlichen keine Kohlenstoffatome enthalten und eine mittlere Teilchengröße von 0,2 µm oder weniger aufweisen.

12. Beschichtungszusammensetzung mit Gasbarrieren-Eigenschaften nach Anspruch 10, wobei die feinen anorganischen Teilchen aus der Gruppe ausgewählt sind, die aus Metalloxidteilchen, Siliciumoxidteilchen, Metallnitridteilchen, Siliciumnitridteilchen und Metallboridteilchen besteht.

13. Beschichtungszusammensetzung mit Gasbarrieren-Eigenschaften nach Anspruch 1, wobei der Bestandteil (c) eine Verbindung mit p=0 in der Formel (2) ist und vorher in Wasser oder einem Mischlösungsmittel, das Wasser und ein hydrophiles organisches Lösungsmittel enthält, hydrolysiert wurde.

14. Verfahren zur Herstellung einer Beschichtungszusammensetzung mit Gasbarrieren-Eigenschaften, das die nachstehenden Schritte umfasst:
Hydrolysieren (b) mindestens einer Verbindung, die aus der Gruppe ausgewählt ist, die aus einem Metallalkoholat mit der nachstehenden Formel (1):
R¹ ₘM(OR²)ₙ (1)
worin M für ein Metallatom steht, das aus der Gruppe ausgewählt ist, die aus Titan, Zirconium und Aluminium besteht, R¹ einzeln eine organische Gruppe mit 1 bis 8 Kohlenstoffatomen, R² einzeln eine Alkylgruppe mit 1 bis 5 Kohlenstoffatomen, eine Acylgruppe mit 1 bis 6 Kohlenstoffatomen oder eine Phenylgruppe wiedergibt, und m und n einzeln eine ganze Zahl von 0 oder größer sind, wobei m + n die Wertigkeit von M wiedergeben,
einem Hydrolysat des Metallalkoholats, einem Kondensat des Metallalkoholats, einer Chelatverbindung des Metallalkoholats, einem Hydrolysat der Metallchelatverbindung, einem Kondensat der Metallchelatverbindung, einem Metallacylat der vorstehenden Formel (1), einem Hydrolysat des Metallacylats und einem Kondensat des Metallacylats besteht, in Wasser oder einem Mischlösungsmittel, das Wasser und ein hydrophiles organisches Lösungsmittel enthält, und
Mischen des resultierenden Hydrolysats mit (a) einem Polyvinylalkoholharz, das ein Copolymer aus Ethylen und Vinylalkohol ist, und (c) mindestens einer Verbindung, die aus der Gruppe ausgewählt ist, die aus einem Organosilan mit der nachstehenden Formel (2):
R³ ₚSi(OR⁴)₄₋ₚ (2)
worin R³ einzeln eine organische Gruppe mit 1 bis 8 Kohlenstoffatomen, R⁴ einzeln eine Alkylgruppe mit 1 bis 5 Kohlenstoffatomen, eine Acylgruppe mit 1 bis 6 Kohlenstoffatomen oder eine Phenylgruppe wiedergibt, und p eine ganze Zahl von 0 bis 2 ist,
einem Hydrolysat des Organosilans und einem Kondensat des Organosilans besteht.

## Revendications

1. Composition de revêtement formant une barrière aux gaz comprenant :
(a) une résine de poly(alcool vinylique), qui est un copolymère d'éthylène et d'alcool vinylique,
(b) au moins un composé choisi dans le groupe constitué par un alcoolate de métal de formule (1) suivante :
R¹ ₘM(OR²)ₙ (1)
dans laquelle M représente un atome de métal choisi dans le groupe constitué par le titane, le zirconium et l'aluminium, R¹ représente individuellement un groupe organique comportant 1 à 8 atomes de carbone, R² représente individuellement un groupe alkyle comportant 1 à 5 atomes de carbone, un groupe acyle comportant 1 à 6 atomes de carbone ou un groupe phényle, et m et n sont individuellement des nombres entiers de 0 ou plus, avec m + n représentant la valence de M, un produit d'hydrolyse de l'alcoolate de métal, un produit de condensation de l'alcoolate de métal, un composé chélaté de l'alcoolate de métal, un produit d'hydrolyse du composé métallique chélaté, un produit de condensation du composé métallique chélaté, un acylate de métal de formule (1) ci-dessus, un produit d'hydrolyse de l'acylate de métal et un produit de condensation de l'acylate de métal, et
(c) au moins un composé choisi dans le groupe constitué par un organosilane de formule (2) suivante,
R³ ₚSi(OR⁴)₄₋ₚ (2)
dans laquelle R³ représente individuellement un groupe organique comportant 1 à 8 atomes de carbone, R⁴ représente individuellement un groupe alkyle comportant 1 à 5 atomes de carbone, un groupe acyle comportant 1 à 6 atomes de carbone ou un groupe phényle, et p est un nombre entier de 0 à 2, un produit d'hydrolyse de l'organosilane et un produit de condensation de l'organosilane.

2. Composition de revêtement formant une barrière aux gaz selon la revendication 1, dans laquelle le copolymère d'éthylène et d'alcool vinylique contient 20 à 45 % en moles de motifs récurrents provenant de l'éthylène.

3. Composition de revêtement formant une barrière aux gaz selon la revendication 1, dans laquelle la résine de poly(alcool vinylique) a un indice de fusion à chaud de 1 à 50 g/10 minutes, mesuré à une température de 210°C et sous une charge de 21,168 N.

4. Composition de revêtement formant une barrière aux gaz selon la revendication 1, contenant 10 à 10 000 parties en poids de la résine de poly(alcool vinylique), pour 100 parties en poids du composant (b).

5. Composition de revêtement formant une barrière aux gaz selon la revendication 1, dans laquelle le composant (b) est un alcoolate de métal, un produit d'hydrolyse de l'alcoolate de métal, un produit de condensation de l'alcoolate de métal, un composé chélaté de l'alcoolate de métal, un produit d'hydrolyse du composé métallique chélaté ou un produit de condensation du composé métallique chélaté, et R¹ dans la formule (1) est un groupe organique choisi dans le groupe constitué par un groupe alkyle comportant 1 à 8 atomes de carbone, un groupe acyle comportant 1 à 8 atomes de carbone, un groupe vinyle, un groupe allyle, un groupe cyclohexyle, un groupe phényle, un groupe glycidyle, un groupe (méth)acryloxy, un groupe uréido, un groupe amide, un groupe fluoroacétamide, un groupe isocyanate et les dérivés substitués de ces groupes.

6. Composition de revêtement formant une barrière aux gaz selon la revendication 1, dans laquelle le composant (b) est un produit d'hydrolyse hydrolysé dans de l'eau ou dans un solvant mixte contenant de l'eau et un solvant organique hydrophile.

7. Composition de revêtement formant une barrière aux gaz selon la revendication 1, contenant 0,1 à 1 000 parties en poids du composant (c), pour 100 parties en poids du composant (a).

8. Composition de revêtement formant une barrière aux gaz selon la revendication 1, comprenant en outre un composé contenant de l'azote.

9. Composition de revêtement formant une barrière aux gaz selon la revendication 8, dans laquelle le composé contenant de l'azote est choisi dans le groupe constitué par le N,N-diméthylacétamide, le N,N-diméthylformamide, la γ-butyrolactone, la N-méthyl-2-pyrrolidone, la pyridine, la thymine, la glycine, la cytosine, la guanine, la polyvinylpyrrolidone, le polyacrylamide, le polyméthacrylamide, et les copolymères produits par copolymérisation de ces composés en tant que co-monomères.

10. Composition de revêtement formant une barrière aux gaz selon la revendication 1, comprenant en outre de fines particules minérales.

11. Composition de revêtement formant une barrière aux gaz selon la revendication 10, dans laquelle les fines particules minérales sont des matières minérales particulaires ne contenant pratiquement pas d'atomes de carbone et ayant une taille moyenne de particule de 0,2 µm ou moins.

12. Composition de revêtement formant une barrière aux gaz selon la revendication 10, dans laquelle les fines particules minérales sont choisies dans le groupe constitué par les particules d'oxyde métallique, les particules d'oxyde de silicium, les particules de nitrure métallique, les particules de nitrure de silicium et les particules de borure métallique.

13. Composition de revêtement formant une barrière aux gaz selon la revendication 1, dans laquelle le composant (c) est un composé dans lequel p = 0 dans la formule (2) et qui est hydrolysé au préalable dans de l'eau ou dans un solvant mixte contenant de l'eau et un solvant organique hydrophile.

14. Procédé de préparation d'une composition de revêtement formant une barrière aux gaz comprenant :
l'hydrolyse (b) d'au moins un composé choisi dans le groupe constitué par un alcoolate de métal de formule (1) suivante :
R¹ ₘM(OR²)ₙ (1)
dans laquelle M représente un atome de métal choisi dans le groupe constitué par le titane, le zirconium et l'aluminium, R¹ représente individuellement un groupe organique comportant 1 à 8 atomes de carbone, R² représente individuellement un groupe alkyle comportant 1 à 5 atomes de carbone, un groupe acyle comportant 1 à 6 atomes de carbone ou un groupe phényle, et m et n sont individuellement des nombres entiers de 0 ou plus, avec m + n représentant la valence de M, un produit d'hydrolyse de l'alcoolate de métal, un produit de condensation de l'alcoolate de métal, un composé chélaté de l'alcoolate de métal, un produit d'hydrolyse du composé métallique chélaté, un produit de condensation du composé métallique chélaté, un acylate de métal de formule (1) ci-dessus, un produit d'hydrolyse de l'acylate de métal et un produit de condensation de l'acylate de métal, dans de l'eau ou dans un solvant mixte contenant de l'eau et un solvant organique hydrophile, et
le mélange du produit d'hydrolyse résultant avec (a) une résine de poly(alcool vinylique), qui est un copolymère d'éthylène et d'alcool vinylique et (c) au moins un composé choisi dans le groupe constitué par un organosilane de formule (2) suivante,
R³ ₚSi(OR⁴)₄₋ₚ (2)
dans laquelle R³ représente individuellement un groupe organique comportant 1 à 8 atomes de carbone, R⁴ représente individuellement un groupe alkyle comportant 1 à 5 atomes de carbone, un groupe acyle comportant 1 à 6 atomes de carbone ou un groupe phényle, et p est un nombre entier de 0 à 2, un produit d'hydrolyse de l'organosilane et un produit de condensation de l'organosilane.
